(19) Europäisches Patentamt

European Patent Office

Office européen des brevets

(11) **EP 3 629 008 B1**

(12) **EUROPEAN PATENT SPECIFICATION**

(45) Date of publication and mention
of the grant of the patent:
**07.08.2024 Bulletin 2024/32**

(21) Application number: **18196735.7**

(22) Date of filing: **26.09.2018**

(51) International Patent Classification (IPC):
**G01N 21/64** *(2006.01)*   **G01N 21/07** *(2006.01)*
**B01L 3/00** *(2006.01)*   **G01N 33/53** *(2006.01)*
**G01N 35/00** *(2006.01)*

(52) Cooperative Patent Classification (CPC):
**G01N 21/6428; B01L 3/5027; G01N 21/07;**
**G01N 21/645; B01L 2200/148; B01L 2300/0654;**
**B01L 2300/0803; B01L 2300/168; B01L 2400/0409;**
**G01N 35/00069**

(54) **SAMPLE ANALYSIS SYSTEM, AND METHOD OF MEASURING LUMINESCENCE OF A SAMPLE**

PROBENANALYSESYSTEM UND VERFAHREN ZUR LUMINESZENZ-MESSUNG EINER PROBE

SYSTÈME D'ANALYSE D'ÉCHANTILLONS ET PROCÉDÉ DE MESURE DE LUMINESCENCE D'UN ÉCHANTILLON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.04.2020 Bulletin 2020/14**

(73) Proprietor: **PHC Holdings Corporation
Tokyo 105-8433 (JP)**

(72) Inventors:
• **KAWATA, Hiroto
  Ehime 791-0395 (JP)**
• **KONDOH, Kazuya
  Ehime 791-0395 (JP)**

(74) Representative: **Vigand, Philippe et al
Novagraaf International SA
Chemin de l'Echo 3
1213 Onex - Genève (CH)**

(56) References cited:
**JP-A- 2015 081 884      US-A- 4 945 250
US-A1- 2009 189 089      US-A1- 2011 104 009
US-A1- 2017 131 304      US-A1- 2018 003 642**

## Description

### BACKGROUND

The present application relates to a sample analysis device, a sample analysis system, and a method of measuring luminescence of a sample.

Techniques have been known which utilize a substrate for sample analysis (hereinafter "sample analysis substrate") in order to analyze a specific component within an analyte, such as urine or blood. For example, Japanese Patent Publication No. 7-500910 discloses a technique that utilizes a disk-shaped sample analysis substrate, on which channels, chambers, and the like are formed. In this technique, the sample analysis substrate is allowed to rotate, etc., thereby effecting transfer, distribution, mixing of solutions, analysis of components within an analyte solution, and so on. The specific component is quantified by detecting light which is generated through immunoreaction, for example.

Further art is disclosed by the documents US 2009/189089 A1, US2011/104009 A1, JP 2015 081884 A and US 2018/0003642 A2.

### SUMMARY

When the concentration of the specific component in the analyte is low, the luminescence due to immunoreaction is also weak. In order to detect a specific component of low concentration with high sensitivity, it is necessary to accurately measure the intensity of subtle luminescence.

A non-limiting, illustrative embodiment of the present application provides a sample analysis system, and a method of measuring luminescence of a sample which allows subtle luminescence to be measured with high sensitivity.

A sample analysis system according to the present invention is defined in the appended claims.

According to the present disclosure, there is provided a sample analysis system, and a method of measuring luminescence of a sample which allows subtle luminescence to be measured with high sensitivity.

### BRIEF DESCRIPTION OF THE DRAWINGS

FIG. **1** is an exemplary schematic diagram describing a sandwich immunoassay utilizing magnetic particles.

FIG. **2A** is a plan view showing an exemplary structure of a sample analysis substrate.

FIG. **2B** is an exploded perspective view of a sample analysis substrate.

FIG. **3A** is a perspective view showing the appearance of a sample analysis device.

FIG. **3B** is a perspective view showing the appearance of a sample analysis device with its door open.

FIG. **4A** is a block diagram illustrating an exemplary sample analysis system.

FIG. **4B** is a block diagram illustrating an exemplary photon counter according to a first embodiment.

FIG. **5** is a diagram showing an exemplary distribution of numbers of photons to be measured while the sample analysis substrate **100** makes one complete turn.

FIG. **6** is a flowchart showing an exemplary operation of a sample analysis system.

FIG. **7** is a diagram showing another method of determining photon counts and dark counts.

FIG. **8** is a diagram showing a method of detecting abnormalities of a sample analysis device by using a distribution of numbers of photons.

FIG. **9** is a diagram showing an exemplary distribution of numbers of photons in a sample analysis substrate having two measurement chambers.

FIG. **10** is a block diagram showing an exemplary photon counter according to a second embodiment.

FIG. **11A** is a diagram showing an exemplary photon count distribution across rotation angles in the range from 0° to 359°.

FIG. **11B** is a diagram showing an exemplary clock count distribution across rotation angles in the range from 0° to 359°.

FIG. **12** is a diagram showing an exemplary corrected photon count distribution across rotation angles in the range from 0° to 359°.

**DETAILED DESCRIPTION**

Assay techniques for components within a sample such as urine or blood may utilize a combination reaction between the analyte being the subject for analysis and a ligand which specifically binds to the analyte. Examples of such assay techniques include immunoassay techniques and genetic diagnosis techniques. A sample such as urine or blood may be referred to as an analyte in the fields of medicine and pharmacy.

Examples of immunoassay techniques are competitive assays and non-competitive assays (sandwich immunoassay). Examples of genetic diagnosis techniques are genetic detection techniques based on hybridization. In these immunoassay techniques and genetic detection techniques, magnetic particles (which may also be referred to as "magnetic beads", "magnetism particles", "magnetism beads", etc.) are used, for example. As an example of such assay techniques, a sandwich immunoassay utilizing magnetic particles will be specifically described.

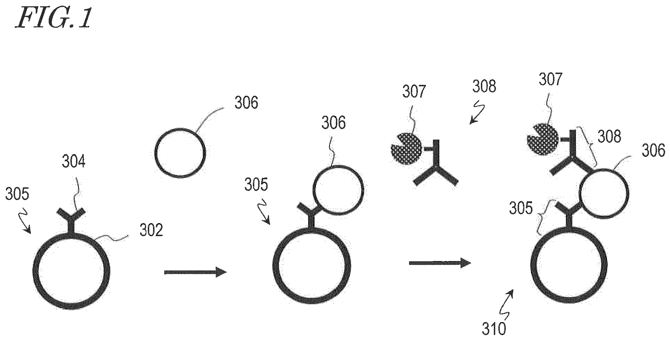

As shown in FIG. **1,** first, a primary antibody **304** having a magnetic particle **302** immobilized to whose surface (hereinafter referred to as the "magnetic-particle-immobilized antibody **305"**) and an antigen **306** that is contained in a sample for measurement are allowed to bind through an antigen-antibody reaction. Next, a secondary antibody to which a label substance **307** has bound (hereinafter referred to as a "labeled antibody **308"**) and the antigen **306** are allowed to bind through an antigen-antibody reaction. As a result, a composite **310** is obtained in which the magnetic-particle-immobilized antibody **305** and the labeled antibody **308** have bound to the antigen **306.**

A signal which is based on the label substance **307** of the labeled antibody **308** that has bound to the composite **310** is detected, and an antigen concentration is measured in accordance with the amount of detected signal. Examples of the label substance **307** include enzymes (e.g., peroxidase, alkaline phosphatase, and luciferase), chemiluminescent substances, electrochemiluminescent substances, and fluorescent substances. In accordance with each such label substance **307,** dye, luminescence, fluorescence, or other signals are detected. Although the light to be detected is not emitted from the sample itself, component analysis of the sample consists in measuring the concentration of the antigen **306** or the like within the sample, and it is the composite **310** with the antigen **306** having bound thereto that undergoes luminescence; therefore, for ease of understanding, the sample will be said to be undergoing luminescence in the present specification.

As a photodetector for detecting subtle light, the inventors have considered the use of a photon counter which counts the number of photons that are associated with luminescence. Since a photon counter has high detection sensitivity, it may also detect stray light that unavoidably occurs from anything but the target of measurement. Moreover, principlewise, a photon counter is susceptible to temperature influences during measurements. The inventors have taken these problems into account, and arrived at a novel sample analysis device. A sample analysis system, and a method of measuring luminescence of a sample according to the present disclosure is defined in the claims.

Hereinafter, with reference to the drawings, a sample analysis device, a sample analysis system, and a method of measuring luminescence of a sample according to the present disclosure will be described. The sample analysis system according to the present disclosure includes a sample analysis device and a sample analysis substrate. The sample analysis system according to the present disclosure is applicable to a method of analysis utilizing the aforementioned magnetic particles. Hereinafter, the respective component elements will be described.

(first embodiment)

(sample analysis substrate **100**)

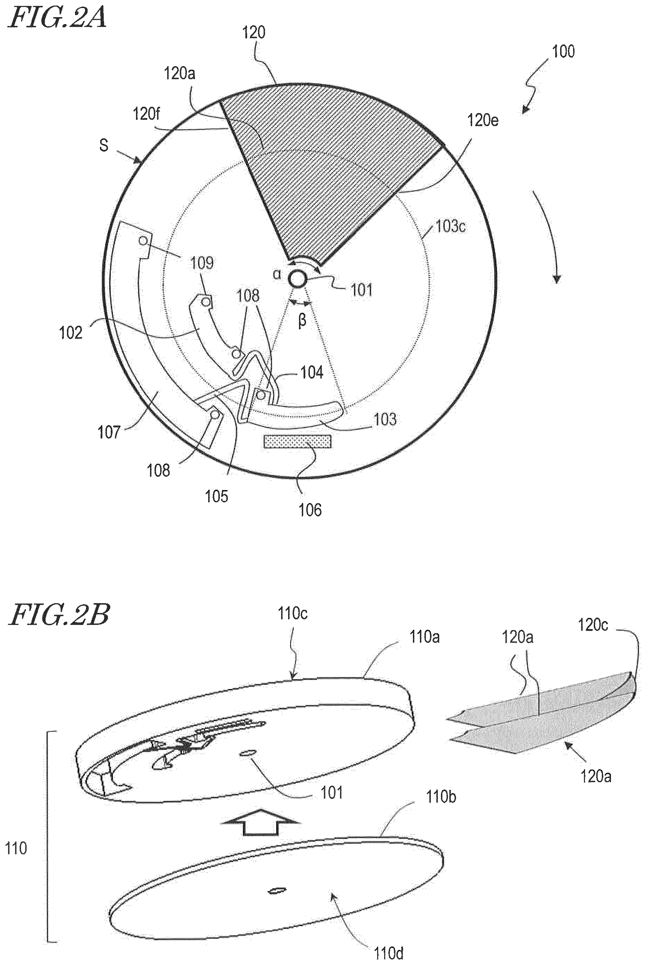

FIG. **2A** and FIG. **2B** are a plan view and an exploded perspective view, respectively, of the sample analysis substrate **100**. The sample analysis substrate **100** includes a substrate **110** having a rotation axis **101** and a plate shape with a predetermined thickness along a direction which is parallel to the rotation axis **101,** and a light-shield cap **120.** Although the substrate **110** of the sample analysis substrate **100** has a circular shape in the present embodiment, it may alternatively be shaped as a polygon, an ellipse, a sector, or the like. The substrate **110** has two principal faces **110c** and **110d.** In the present embodiment, the principal face **110c** and the principal face **110d** are parallel to each other, and the thickness of the substrate **110** as defined by an interspace between the principal face **110c** and the principal face **110d** is constant irrespective of position within the substrate **110**. However, the principal faces **110c** and **110d** do not need to be parallel. For example, the two principal faces may be partly non-parallel or parallel, or be entirely non-parallel. Moreover, at least one of the principal faces **110c** and **110d** of the substrate **110** may have a structure with recesses or protrusions. The sample analysis substrate **100** includes a reaction chamber **102** located in the substrate **110**, a measurement chamber **103**, a recovery chamber **107**, a channel **104**, and a channel **105**.

In the present embodiment, the substrate **110** of the sample analysis substrate **100** is composed of a base substrate **110a** and a cover substrate **110b**. The respective spaces of the reaction chamber **102**, the measurement chamber **103**, and the recovery chamber **107** are formed within the base substrate **110a**, and as the cover substrate **110b** covers over the base substrate **110a**, a top and a bottom of each space are created. In other words, the respective spaces of the reaction chamber **102**, the measurement chamber **103**, and the recovery chamber **107** are defined by at least one inner face of the sample analysis substrate **100**. The channel **104** and the channel **105** are also formed in the base substrate **110a**, and as the cover substrate **110b** covers over the base substrate **110a**, a top and a bottom of each space of the channel **104** and the channel **105** are created. Thus, the reaction chamber **102**, the measurement chamber **103**, the recovery chamber **107**, and the channel **104** and channel **105** are enclosed within the substrate **110**.

In at least one of the principal face **110c** and the principal face **110d**, the measurement chamber **103** has a window through which the luminescence occurring from a composite **310** containing a sample to be retained in the measurement chamber **103** is transmitted. In the present embodiment, the base substrate **110a** and the cover substrate **110b** are utilized respectively as an upper face and a lower face. The substrate **110** may be formed of a transparent resin which may be acrylic, polycarbonate, polystyrene, or the like. As used herein, "transparent" refers to the ability to transmit light of a wavelength region that is detectable by a photodetector **209** described below, within the luminescence occurring from the composite **310**.

The light-shield cap **120**, which includes a pair of shading portions **120a** and a connecting portion **120c**, is attached to the substrate **110** so that the shading portions **120a** partially cover the principal faces **110c** and **110d** of the substrate **110**. In the present embodiment, each shading portion **120a** has a substantial sector shape. The shading portions **120a** are made of a material that does not transmit luminescence occurring from the composite **310**. Preferably, each shading portion **120a** is provided at a position on the principal face **110c** or **110d** of the substrate **110** that is opposed to the light-receiving surface of the photodetector **209**. Moreover, as shown in FIG. **2A**, a central angle $\alpha$ of the region of the principal face **110c** or the principal face **110d** where the shading portion **120a** is located is preferably larger than a central angle $\beta$ of the region where the measurement chamber **103** is located.

As has been described with reference to FIG. 1, the reaction chamber **102** is a reaction field in which the magnetic-particle-immobilized antibody **305**, an analyte containing the antigen **306**, and the labeled antibody **308** are allowed to react and form the composite **310**. There is no particular limitation as to the shape of the reaction chamber **102**. In the present embodiment, the sample analysis substrate **100** includes the reaction chamber **102** as a reaction field where the composite **310** is allowed to form. Various means may be adopted in transferring the magnetic-particle-immobilized antibody **305**, a sample containing the antigen **306**, and the labeled antibody **308** to the reaction chamber **102**. For example, a mixed solution in which the magnetic-particle-immobilized antibody **305**, the sample containing the antigen **306**, and the labeled antibody **308** have been previously mixed may be weighed out, and the mixed solution may be injected into the reaction chamber **102** in the sample analysis substrate **100**. Moreover, the sample analysis substrate **100** may include chambers respectively retaining the magnetic-particle-immobilized antibody **305**, the sample containing the antigen **306**, and the labeled antibody **308**, and a channel (e.g., a capillary channel) via which each chamber and the reaction chamber **102** are coupled. In this case, the magnetic-particle-immobilized antibody **305**, the sample containing the antigen **306**, and the labeled antibody **308** may be weighed out into the respective chambers; the magnetic-particle-immobilized antibody **305**, the sample containing the antigen **306**, and the labeled antibody **308** having been injected into the respective chambers may be transferred to the reaction chamber **102**; and they may be mixed in the reaction chamber **102** to form the composite **310**. Moreover, the magnetic-particle-immobilized antibody **305** and the labeled antibody **308** may be dried (hereinafter referred to as "dried reagents"). In this case, for example, the dried reagents may be retained in the reaction chamber **102**, and dissolved by a liquid containing a sample solution containing the antigen **306** to form the composite **310**. Moreover, during measurement, a dried reagent which is retained in a certain chamber that is not the reaction chamber **102** may be dissolved by a liquid, then transferred to the chamber **102**, and mixed with the sample containing the antigen **306** in the reaction chamber **102**, thereby allowing the composite **310** to form.

The channel **104** has a path that connects the reaction chamber **102** and the measurement chamber **103**, with one end being connected to the reaction chamber **102**, and the other end being connected to the measurement chamber **103**. The position of connection between the reaction chamber **102** and the channel **104** is located closer to the rotation axis **101** than is the position of connection between the measurement chamber **103** and the channel **104**. With this construction, the solution containing the composite **310** receives a centrifugal force which is generated by rotation of the sample analysis substrate **100**, and is transferred to the measurement chamber **103** via the channel **104**.

In the measurement chamber **103**, a B/F separation of the solution containing the composite **310** takes place. For this purpose, the sample analysis substrate **100** includes a magnet **106**. In the substrate **110**, the magnet **106** is located close to the space of the measurement chamber **103.**

The magnet **106** is located more distant from the rotation axis **101** than is the measurement chamber **103.** The magnet **106** may be capable of attachment and detachment for B/F separation, or undetachably attached to the sample analysis substrate **100.** The magnet **106** may be a magnet to be commonly used in an immunoassay technique which involves a competitive assay using magnetism particles, for example. Specifically, a ferrite magnet, a neodymium magnet, or the like may be used. In particular, a neodymium magnet has a strong magnetic force, and is suitably used for the magnet **106.**

As shown in FIG. **2A,** the channel **105** has a path connecting the measurement chamber **103** and the recovery chamber **107,** with one end being connected to the measurement chamber **103,** and the other end being connected to the recovery chamber **107.** The position of connection between the measurement chamber **103** and the channel **105** is located closer to the rotation axis **101** than is the position of connection between the recovery chamber **107** and the channel **105.** With this construction, the liquid which has been separated from the solution containing the composite **310** through B/F separation receives a centrifugal force which is generated by rotation of the sample analysis substrate **100,** and is transferred to the recovery chamber **107** via the channel **105.**

The spaces of the reaction chamber **102,** the measurement chamber **103,** and the recovery chamber **107** may be about 10 μl to about 500 μl in size, for example. Preferably, the channel **104** and the channel **105** is composed in a size which allows themselves to be filled with the liquid that is retained in the reaction chamber **102** and the measurement chamber **103** via capillary action. In other words, the channel **104** and the channel **105** are preferably capillary channels or capillary tubes. For example, a cross section which is perpendicular to the direction that each of the channel **104** and the channel **105** extends may have a width of 0.1 mm to 5 mm and a depth of 50 μm to 300 μm or have a width of 50 μm or more (preferably 50 μm to 300 μm) and a depth of 0.1 mm to 5 mm.

At least one air hole **108** is provided in each of the reaction chamber **102,** the measurement chamber **103,** and the recovery chamber **107.** As a result, the interior of each chamber is maintained at the environmental air pressure, so that the liquid may move through the channel **104** or **105** by capillary action and the siphon principle. Moreover, an opening **109** through which to inject or discharge liquids such as a sample solution, reaction solution, or a wash solution may be made in the reaction chamber **102** and the recovery chamber **107.** As used herein, the siphon principle refers to the control on liquid transfer which is based on a balance between a centrifugal force that acts on a liquid due to rotation of the sample analysis substrate **100** and the capillary force within the channel.

(construction of sample analysis device **200**)

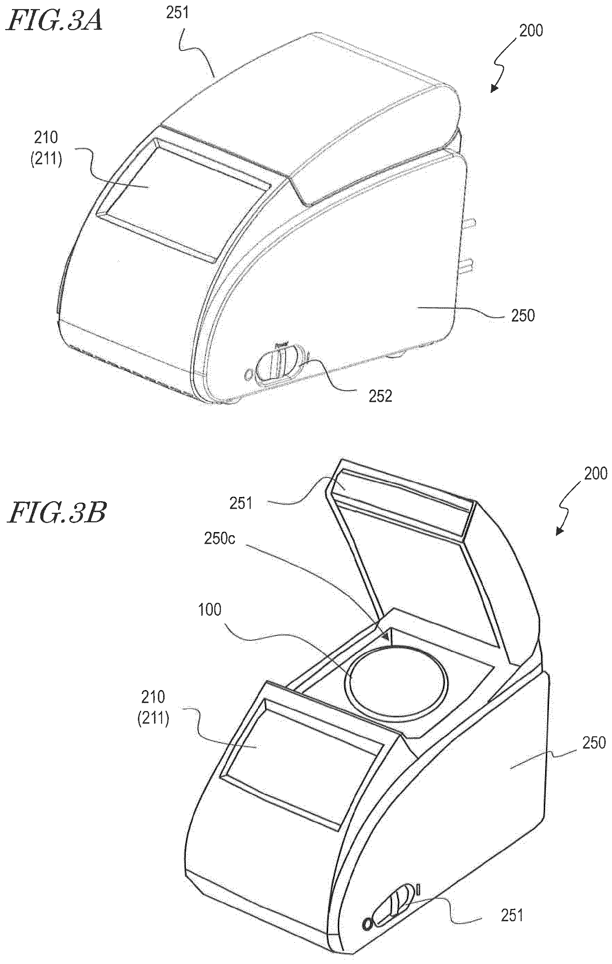

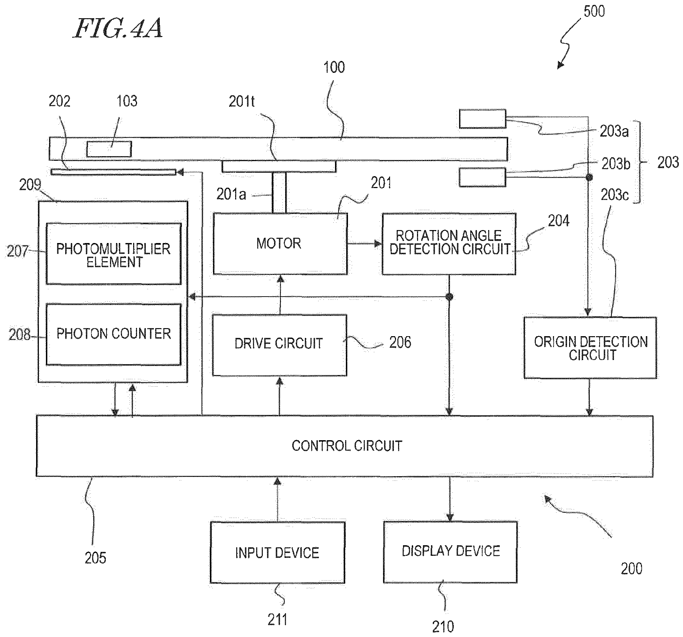

FIG. **3A** and FIG. **3B** are perspective views showing an exemplary appearance of the sample analysis device **200.** FIG. **4A** is a block diagram showing an exemplary construction of the sample analysis device **200.** The sample analysis device **200** has a housing **250** that includes a door **251** which is capable of opening and closing. The housing **250** has an accommodation **250c** in which the sample analysis substrate **100** is accommodated so as to be capable of rotation. In the accommodation **250c,** a motor **201** (FIG. **4A**) having a turntable **201t** is disposed. While the door **251** is open, the sample analysis substrate **100** can be attached to or detached from the turntable **201t** within the accommodation **250c.** As the door **251** is closed, the door **251** shields the accommodation **250c** from light so that no light may enter the accommodation **250c** from the exterior. On the housing **250,** a power switch **252** for starting or stopping the sample analysis device **200** and a display device **210** (to be described later) are provided.

With reference to FIG. **4A,** the sample analysis device **200** will be described in detail. The sample analysis device **200** includes the motor **201,** the shutter **202,** an origin detector **203,** a rotation angle detection circuit **204,** a control circuit **205,** a drive circuit **206,** the photodetector **209,** a display device **210,** and an input device **211.**

The motor **201,** which has the turntable **201t** supporting the sample analysis substrate **100,** and rotates the sample analysis substrate **100** around a shaft **201a.** The shaft **201a** may be inclined from the direction of gravity at an angle of not less than 0° and not more than 90° with respect to the direction of gravity. The motor **201** may rotate the sample analysis substrate in a range from 100 rpm to 8000 rpm, for example. The rotation speed may be determined in accordance with the shape of each chamber and channel, the physical properties of liquids, the timing of transfers of liquids and treatments, and the like. The motor **201** may be a DC motor, a brushless motor, an ultrasonic motor, or the like, for example.

For example, the origin detector **203** includes a light source **203a,** a photodetector **203b,** and an origin detection circuit **203c,** and is disposed so that the sample analysis substrate **100** comes between the light source **203a** and the photodetector **203b.** For example, the light source **203a** may be a light-emitting diode, and the photodetector **203b** may be a photodiode. The light source **203a** may be attached on the inside of the door **251,** for example.

The origin detector **203** detects an origin of the sample analysis substrate **100** attached to the motor **201.** Specifically, the boundary between a light-transmitting portion and a shading portion of the sample analysis substrate **100** as an origin. For example, the light-shield cap **120** may have a transmittance of 10% or less for light exiting from the light source **203a** along the thickness direction of the sample analysis substrate **100,** and a transmittance of 60% or more at the substrate **110.**

As the sample analysis substrate **100** is rotated by the motor **201,** the photodetector **203b** outputs a detection signal which is in accordance with the amount of incident light on the origin detection circuit **203c.** As shown in FIG. **2A,** depending on the direction of rotation, the detection signal may increase or decrease at an edge **120e** and at an edge **210b** of the light-shield cap **120.** The origin detection circuit **203c** detects a decrease in the amount of detected light and outputs it as an origin signal, for example, while the sample analysis substrate **100** is rotating clockwise as indicated by the arrow. In the present specification, the position of the edge **120e** of the light-shield cap **120** will be regarded as the origin position of the sample analysis substrate **100** (i.e., a reference angular position of the sample analysis substrate **100).** However, a position at any specific angle, as arbitrarily determined from the position of the edge **120e,** might be defined as an origin.

The origin position is utilized by the sample analysis device **200** in acquiring information on the rotation angle of the sample analysis substrate **100.** The origin detector **203** may have any other construction. For example, a magnet for use in origin detection may be provided on the sample analysis substrate **100,** and, instead of the photodetector **203b,** the origin detector **203** may include a magnetism detector which detects magnetism of this magnet. Moreover, the magnet **106** for use in capturing the magnetic particles may also be utilized for origin detection. In the case where the sample analysis substrate **100** is attachable to the turntable **201t** only at a specific angle, the origin detector **203** may be omitted.

The rotation angle detection circuit **204** detects the angle of the shaft **201a** of the motor **201.** For example, the rotation angle detection circuit **204** may be a rotary encoder that is attached to the shaft **201a.** In the case where the motor **201** is a brushless motor, the rotation angle detection circuit **204** may include a Hall generator that is provided on the brushless motor and a detection circuit which receives an output signal from the Hall generator and outputs a rotation angle signal representing the angle of the shaft **201a.** When the sample analysis substrate **100** is attached to the turntable **201t,** the sample analysis substrate **100** rotates around the shaft **201a,** and thus the rotation angle detection circuit **204** is able to detect the rotation angle of the sample analysis substrate **100** and output a rotation angle signal. The rotation angle signal may be, for example, a pulse signal containing pulses that are output by every predetermined angle.

The drive circuit **206** drive the motor **201** to rotate. Specifically, based on instructions from the control circuit **205,** the sample analysis substrate **100** is rotated clockwise or counterclockwise, and its swings or rotation is stopped.

The photodetector **209** detects luminescence occurring from the label substance **307** of the labeled antibody **308** bound to the composite **310** (FIG. 1) being retained in the measurement chamber **103** of the sample analysis substrate **100.** Herein, luminescence refers to any release of photons, irrespective of the principle of luminescence, e.g., fluorescence or phosphorescence. That is, the photodetector **209** measures a number of photons in the luminescence occurring from the label substance **307.** Specifically, the photodetector **209** includes a photomultiplier element **207** and a photon counter **208.** The photomultiplier element **207** receives photons in the luminescence occurring from the label substance **307,** and outputs a number of pulses that is in accordance with the number of photons. With the sample analysis substrate **100** being attached to the turntable **201t,** the light-receiving surface of the photomultiplier element **207** is disposed below a concentric circle **103c** (FIG. **2A)** on which the measurement chamber **103** is located.

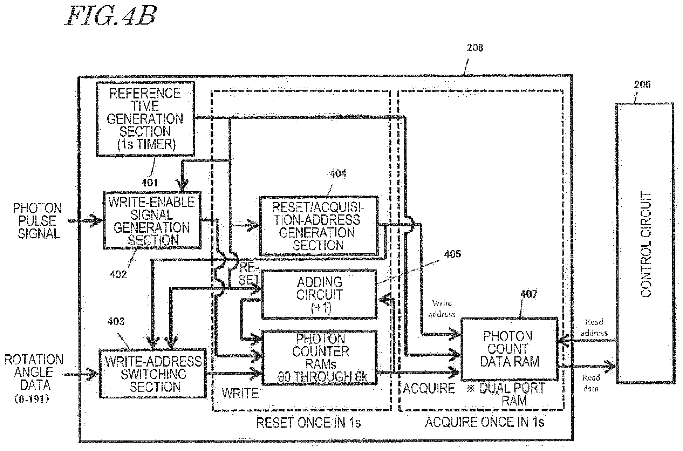

The photon counter **208** measures the number of pulses in the pulse signal which is output from the photomultiplier element **207,** based on a predetermined unit of reference. For example, the photon counter **208** has a construction as shown in FIG. **4B,** and counts the number of photons based on the rotation angle of the sample analysis substrate **100** as a unit of reference. Specifically, based on a rotation angle signal which is output from the rotation angle detection circuit **204,** the photon counter **208** divides the angle of one complete turn, i.e., 360°, of the sample analysis substrate **100** into a plurality of phase ranges θ**0** to θ**k,** and measures the number of pulses in accordance with photons, by using counters for the respective phase ranges. Note that k may be 191, for example, and the photon counter **208** may count the number of photons with a resolving power of 1.875°. To this end, the photon counter **208** includes a reference time generation section **401,** a write-enable signal generation section **402,** a write-address switching section **403,** a reset/acquisition-address generation section **404,** an adding circuit **405,** photon counter RAMs θ**0** through θ**k,** and a photon count data RAM **407.**

The reference time generation section **401** generates a reference time for resetting the counters. For example, the reference time may be 1 second. The write-enable signal generation section **402** generates a write-enable signal each time receiving a pulse signal based on photons. Based on a rotation angle signal which is output from the rotation angle detection circuit **204,** the write-address switching section **403** switches between the photon counter RAMs θ**0** through θ**k** to which a write is made.

The reset/acquisition-address generation section **404** generates addresses at which the data of the photon counter RAMs θ**0** through θ**k** are to be written to the photon count data RAM **407.**

The adding circuit **405** and the photon counter RAMs θ**0** through θ**k** constitute (k+1) counters for the phase ranges θ**0** to θ**k.**

The photon count data RAM **407,** which is a register, reads the count numbers as counted by the photon counter RAMs θ**0** through θ**k,** and temporarily stores the count numbers until the control circuit has read the count numbers.

While the photomultiplier element **207** outputs a pulse signal upon detection of photons in the luminescence occurring from the label substance **307,** the write-enable signal generation section **402** generates a write-enable signal each time receiving a pulse based on a photon. Since the write-address switching section **403** consecutively switches between the photon counter RAMs θ**0** through θ**k** to write to based on the rotation angle signal, the write-enable signal is input to one of the photon counter RAMs θ**0** through θ**k** that corresponds to the angle of the sample analysis substrate **100** at the time of a photon occurrence, and the adding circuit **405** causes the count number in that RAM to be incremented by one.

Based on address signals generated by the reset/acquisition-address generation section **404,** the photon count data RAM **407** reads the count numbers that are stored in the photon counter RAMs θ**0** through θ**k.** The reference time generation section **401** resets these circuits at the lapse of every reference time.

The control circuit **205** reads the values of the photon counter RAMs θ**0** through θ**k** as stored into the photon count data RAM **407.** As a result, during the course of every reference time as output by the reference time generation section **401,** a plurality of measurement values which represent the numbers of photons for the phase ranges θ0 to θk are obtained.

If the time interval of counting the number of photons is sufficiently shorter than the amount time required for one complete turn of the sample analysis substrate **100,** the photon counter **208** may count the number of photons on the basis of time. While the sample analysis substrate **100** is rotating with a constant rotation speed, ideally speaking, the rotation speed during one complete turn of the sample analysis substrate **100** is essentially constant, irrespective of the rotation angle. For example, the amount of time required for the sample analysis substrate **100** to rotate by 1° is constant while the rotation angle of the sample analysis substrate **100** ranges from 0° to 359°. Therefore, it is possible to count the number of photons while relying on time as a unit of reference.

The photomultiplier element **207** may be a traditional photomultiplier tube which is based on a vacuum tube having a plurality of electrodes thereon, or a semiconductor-based photomultiplier element, such as a silicon photomultiplier utilizing an avalanche photodiode in Geiger mode. Moreover, the photon counter **208** may be incorporated in the control circuit **205** as described below. The photon counter **208** is composed of an integrated circuit such as an FPGA, for example. Alternatively, the aforementioned signal processing by the photon counter **208** may be carried out by software that is executed by the control circuit **205.**

The shutter **202** is provided between the light-receiving surface of the photomultiplier element **207** of the photodetector **209** and the sample analysis substrate **100,** and controls opening and closing of the light-receiving surface. While the shutter **202** is open, luminescence occurring from the composite **310** being retained in the measurement chamber **103** of the rotating sample analysis substrate **100** is incident on the photomultiplier element **207.** While the shutter **202** is closed, luminescence is blocked. The shutter **202** may have a mechanical structure, or be a liquid crystal shutter or the like.

The control circuit **205** controls the respective component elements such as the photodetector **209,** the drive circuit **206,** and the shutter **202.** Moreover, the control circuit **205** receives from the photodetector **209** measurement values of the number of photons for each of the phase ranges θ0 to θk as measured by the photodetector **209** while the motor **201** rotates the sample analysis substrate **100,** and stores them to memory.

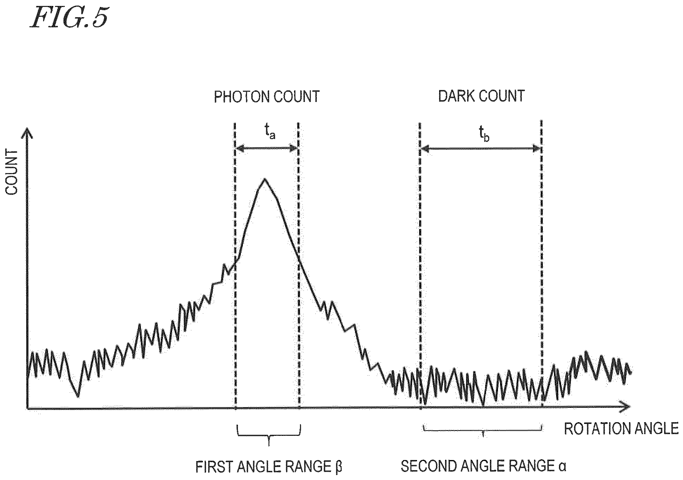

After measurement is finished, a measurement value of the luminescence of the sample is calculated from a distribution of the numbers of photons for the phase ranges θ0 to θk as stored in the memory, i.e., numbers of photons as a plurality of measurement values that are measured while the sample analysis substrate **100** makes one complete turn. FIG. 5 shows an exemplary distribution of numbers of photons to be measured while the sample analysis substrate **100** makes one complete turn. FIG. **5** shows a distribution of numbers of photons, where 0° on the horizontal axis is based on a point of time at which a position **S** on the sample analysis substrate **100** passes over the light-receiving surface of the photomultiplier element **207.** Since the substrate **110** is light-transmissive, photons are detected even at angles at which the measurement chamber **103** is not passing over the light-receiving surface of the photodetector **209.** On the other hand, when the shading portions **120a** pass over light-receiving surface, hardly any photons are detected.

However, as described above, detection sensitivity of the photomultiplier element **207,** particularly in terms of noise, has some temperature dependence. Therefore, even in the case where photons are not actually detected, depending on the measurement temperature, a pulse signal may be output as if a photon were detected. Moreover, other than temperature, there may also be factors that affect accurate measurement of the number of photons. For example, the accommodation **250c** may not be an ideal darkroom, and light other luminescence occurring from the label substance **307** of the composite **310** may possibly be incident on the photomultiplier element **207.**

Therefore, during rotation of the sample analysis substrate **100,** the control circuit **205** corrects the number of photons as obtained while detecting the measurement chamber **103,** by using the number of photons as obtained while detecting the shading portions **120a.** Hereinafter, the number of photons as obtained while detecting the measurement chamber **103** will be referred to as a photon count, and the number of photons as obtained while detecting the shading portions **120a** will be referred to as a dark count.

Specifically, first, within a distribution of numbers of photons as counted during one complete turn of the sample analysis substrate **100,** positions of photon counts and dark counts are identified. The positions of photon counts and dark counts can be identified by using the central angle β of the region where the measurement chamber **103** is located and the central angle α of the region where the shading portions **120a** are located, how many divided phase ranges 00 to θk there are, and an origin which is detected by the origin detector **203.** The photon counts and dark counts within the distribution of numbers of photons as counted during one complete turn of the sample analysis substrate **100** are defined as spanning a first angle range β and a second angle range **a,** respectively.

Next, from the first angle range β and the second angle range α, a photon count, i.e., at least one first measurement value that is output from the photodetector **209,** and a dark count, i.e., at least one second measurement value that is output from the photodetector **209,** are determined, and the at least one first measurement value is corrected with the at least one second measurement value.

For example, by subtracting the second measurement value from the first measurement value, a measurement value of luminescence occurring from the composite **310** may be obtained. In more general terms, a measurement value $C[s-1]$ of luminescence occurring from the composite **310** (sample) is expressed by the following Expression (1), where $ta[s]$ is the period corresponding to the first angle range β; $tb[s]$ is the period corresponding to the second angle range a; and, given n and m points of measurement in the respective periods, the number of photons in the respective points of measurement are represented as first measurement values $Ai$ ($i= 1$ to $n$) and second measurement values $Bj$ ($j= 1$ to $m$). In other words, the dark count is subtracted from the photon count per unit time, thereby obtaining a measurement value C.

$$C = \frac{1}{t_a}\sum_{i=1}^{n} A_i - \frac{1}{t_b}\sum_{j=1}^{m} B_j \qquad (1)$$

In the case where the temperature change over time in the accommodation **250c** is large, or, when as accurate a correction needs to be made as possible, it is preferable to use photon and dark counts ($Ai$ and $Bj$) obtained while the sample analysis substrate **100** makes one complete turn. However, in the case where the temperature change over time in the accommodation **250c** is not large, or from any other reason, the photon and dark counts may be data that is obtained from a different rotation. Note that a measurement value C of luminescence of the sample as obtained from Expression (1) is a value that is derived through a single rotation. A total of measurement values C obtained through a plurality of rotations may be obtained, or an average of measurement values C obtained through a plurality of rotations may be taken.

Also, by setting a larger second angle range α corresponding to dark counts than the first angle range β corresponding to photon counts, it is possible to prolong the period corresponding to dark counts, which are susceptible to fluctuations, so that more stable dark count values can be obtained. To do this, as mentioned earlier, the central angle α of the region where the shading portions **120a** are located may be made greater than the central angle β of the region where the measurement chamber **103** is located.

Through such computation, it is possible to count the number of photons with reduced temperature influences. In particular, by using detection results for the measurement chamber **103** and detection results for the shading portions **120a** which are obtained during one complete turn, the number of photons from luminescence and the number of photons from non-luminescence can be measured essentially concurrently, thereby further reducing the influences of temperature changes over time.

The control circuit **205** outputs the measurement value C which has been obtained through this computation to the display device **210.** The measurement value C may be allowed to be stored to memory in the control circuit **205.**

For example, the control circuit **205** includes a CPU and a memory provided in the sample analysis device **200,** as well as an interface with which to receive signals from the origin detector **203,** the rotation angle detection circuit **204,** and the photodetector **209.** By executing a computer program that is loaded into a memory such as an RAM (Random Access Memory), the control circuit **205** sends instructions to other circuitry in accordance with the procedure defined by the computer program. Upon receiving such an instruction, each circuit operates as will be described in the present specification, whereby the function of the respective circuit is realized. The instructions from the control circuit **205** are sent to the drive circuit **206,** the shutter **202,** and the like, as shown in FIG. **4A,** for example. The procedure defined by the computer program is shown by a flowchart described below.

Note that the memory into which a computer program is loaded, e.g., a RAM storing a computer program, may be volatile or non-volatile. A volatile RAM is a RAM which in the absence of supplied power is unable to retain the information that is stored therein. For example, a dynamic random access memory (DRAM) is a typical volatile RAM. A non-volatile RAM is a RAM which is able to retain information without power being supplied thereto. For example, a magnetoresistive RAM (MRAM), a resistive random access memory (ReRAM), and a ferroelectric memory (FeRAM) are examples of non-volatile RAMs. In the present embodiment, a non-volatile RAM is preferably adopted. A volatile RAM and a non-volatile RAM are both examples of non-transitory, computer-readable storage media. Moreover, a magnetic storage medium such as a hard disk, and an optical storage medium such as an optical disc are also examples of non-transitory, computer-readable storage media. That is, a computer program according to the present disclosure may be recorded on various non-transitory computer-readable media, excluding any medium such as the atmospheric air (transitory media) that allows a computer program to be propagated as a radiowave signal.

In the present specification, the photon counter **208** of the photodetector **209** and the control circuit **205** are described as distinct component elements from the rotation angle detection circuit **204** and the origin detection circuit **203c** of the origin detector **203**. However, these may be implemented by the same hardware. For example, in a serial or parallel manner, a CPU (computer) which is provided in the sample analysis device **200** may execute a computer program to function as the photon counter **208,** a computer program to function as the control circuit **205,** a computer program to function as the rotation angle detection circuit **204,** and a computer program to function as the origin detection circuit **203c** of the origin detector **203**. This allows the CPU to apparently operate as distinct component elements.

The display device **210** is a display panel such as a liquid crystal display panel or an organic EL panel, and displays: the aforementioned measurement value C which is output from the control circuit **205** and/or information based on the measurement value C; a past measurement value(s) C; information for prompting the operator to make inputs as part of the manipulation of the sample analysis device **200;** and so on.

Based on the operator's manipulation, the input device **211** gives an instruction to the control circuit **205**. The input device **211** may be a touch screen panel that is provided on the display device **210,** for example.

(Operation of sample analysis system)

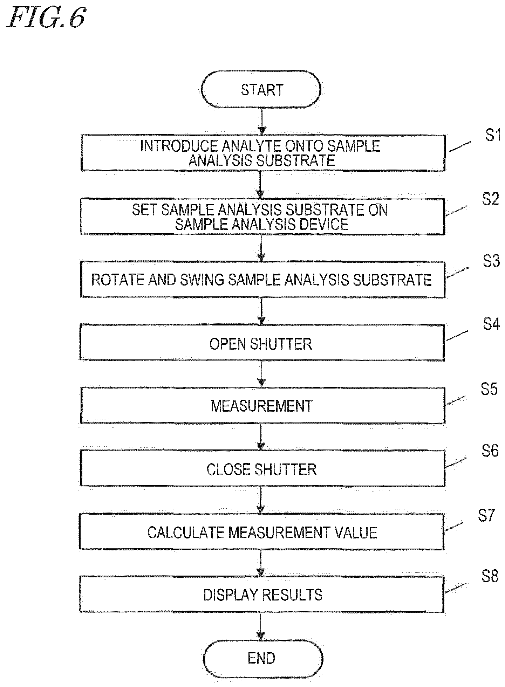

With reference to FIG. **1,** FIG. **2A,** FIG. **4A,** FIG. **4B,** FIG. **5,** and FIG. **6,** an operation of a sample analysis system **500** will be described. FIG. **6** is a flowchart showing an operation of the sample analysis system **500.**

(1) a process of introducing a sample on the sample analysis substrate

[step S1]

First, in the reaction chamber **102** of the sample analysis substrate **100,** the magnetic-particle-immobilized antibody **305,** a sample containing the antigen **306,** and the labeled antibody **308** are allowed to react simultaneously, thereby forming the composite **310**. For example, a liquid containing the magnetic-particle-immobilized antibody **305** may be retained in the reaction chamber **102,** and a sample containing the antigen **306** and a liquid containing the labeled antibody **308** may be introduced through the opening **109** into the reaction chamber **102,** with a syringe or the like. In the case where a chamber (not shown) retaining the sample containing the antigen **306** and the labeled antibody **308** is provided in the sample analysis substrate **100,** the sample may be introduce into that chamber. The labeled antibody **308** may have been introduced into the chamber in advance.

[step S2]

The power switch **252** of the sample analysis device **200** is turned ON. The door **251** of the sample analysis device **200** is opened, and the sample analysis substrate **100** is attached to the turntable **201t**. The door **251** is closed.

(2) a process of transferring the sample to the measurement chamber

[step S3]

In accordance with information which is displayed on the display device **210,** as the operator touches on the display device **210,** an instruction is input from the input device **211** to the control circuit **205,** whereby the sample analysis device **200** operates. First, the motor **201** rotates, and the origin detector **203** detects an origin of sample analysis substrate **100**. By using the detected origin position, the motor **201** rotates in a manner of swinging the sample analysis substrate **100,** whereby an antigen-antibody reaction takes place in the reaction chamber **102**. In the reaction chamber **102,** after the composite **310** has occurred, the sample analysis substrate **100** is rotated, thus allowing the solution containing the composite **310** and the unreacted magnetic-particle-immobilized antibody **305** to move to the measurement chamber **103.**

After all of the solution containing the composite **310** has been transferred to the measurement chamber **103,** the sample analysis substrate **100** is stopped at a predetermined rotation angle. Once the liquid containing the composite **310** and the unreacted magnetic-particle-immobilized antibody **305** is transferred from the reaction chamber **102** to the measurement chamber **103,** the composite **310** and the unreacted magnetic-particle-immobilized antibody **305** (hereinafter, a combination of both of these may be referred to merely as "magnetic particles **311")** are attracted toward the side face of the measurement chamber **103** by the magnetic force of the magnet **106** and retained there.

Next, as the sample analysis substrate **100** is rotated, a centrifugal force is generated with the rotation, which acts on the liquid in the measurement chamber **103** and the magnetic particles **311** containing the composite **310.** The direction of this centrifugal force coincides with the direction of the attractive force that the magnetic particles **311** receive from the magnet **106.** As a result, the magnetic particles **311** are strongly pressed against the side face of the measurement chamber **103.**

The liquid under the centrifugal force is discharged through the channel **105,** and transferred to the recovery chamber **107.** Since the magnetic particles **311** are being strongly pressed against the side face of the measurement chamber **103** with a sum of the centrifugal force and the attractive force of the magnet **106,** only the liquid is discharged through the channel **105,** while the magnetic particles **311** remain in the measurement chamber **103.**

After all liquid has moved to the recovery chamber **107,** rotation of the sample analysis substrate **100** is stopped. Thus, B/F separation is completed, whereby the liquid and the magnetic particles **311** in the measurement chamber **103** have been separated.

(3) a process of measuring number of photons from luminescence

[step S4]

The shutter **202** is opened, and the sample analysis substrate **100** is rotated. The shutter **202** may be opened only after the rotating sample analysis substrate **100** has attained constant rotation.

[step S5]

By using the photodetector **209,** luminescence occurring from the label substance **307** of the labeled antibody **308** bound to the composite **310,** being contained in magnetic particles **311,** is detected. Specifically, the photomultiplier element **207** of the photodetector **209** generates a pulse signal in accordance with photons from luminescence; and, by using a rotation angle signal which is output from the rotation angle detection circuit **204,** the photon counter **208** counts the number of photons for each of phase ranges θ0 to θk. The control circuit **205** consecutively receives respective measurement values for the phase ranges θ0 to θk, and stores them to memory.

[step S6]

After detecting luminescence for a certain period of time, the shutter **202** is closed, and detection is ended.

(4) a process of correcting measurement values

[step S7]

From the memory, the control circuit **205** reads out respective measurement values for the phase ranges θ0 to θk, and after determining a period corresponding to photon counting and a period corresponding to dark counting as described above, determines a measurement value C in accordance with Expression (1), for example.

(5) a process of displaying measurement value

[step S8]

On the display device **210,** the measurement value C and/or index values concerning the amount, concentration, etc., of antigen as determined from the measurement value C.

(effects)

With the sample analysis device, sample analysis system, and method of measuring luminescence according to the present embodiment, luminescence of a sample is measured while rotating a sample analysis substrate that has a shading portion(s). As a result, a photodetector is able to acquire a measurement value from luminescence of the sample, and also a measurement value of a state where the photodetector is shaded. Moreover, the measurement value from luminescence of the sample can be corrected with the shaded measurement value, thereby suppressing influences of fluctuations in the measurement value due to temperature changes in the photodetector and/or any stray light or the like which is not luminescence of the sample during measurement, thus enabling highly accurate measurement. In particular, since the measurement from luminescence of the sample and the shaded measurement can be acquired during rotation of the sample analysis substrate, e.g., during one complete turn, the time interval between the two measurements can be made short. This reduces the change, if any, in the temperature of the measuremental environment between the two measurements, thus permitting a highly accurate temperature compensation for the measurement value.

(variants)

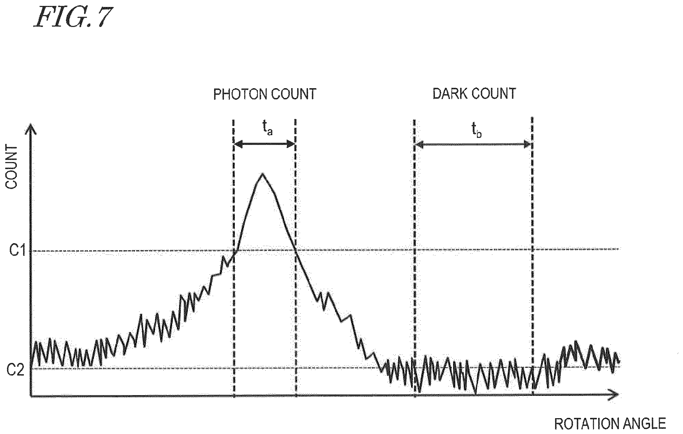

The sample analysis device, sample analysis system, and method of measuring luminescence according to the present disclosure admits of various modifications. For example, although the sample analysis device **200** of the above embodiment includes the rotation angle detection circuit **204,** luminescence measurement may instead be made without using a rotation angle signal that is obtained from the rotation angle detection circuit **204.** In this case, similarly to a generic photon counter, the photon counter **208** may count the pulses which are output from the photomultiplier element **207** over the course of a predetermined reference time, and output them to the control circuit **205.** The control circuit **205** may store a first threshold C1 and a second threshold C2 in memory, such that the first threshold C1 is greater than the second threshold C2 (C1>C2). As shown in FIG. 7, the rotation angle signal may be compared against each of the first threshold C1 and the second threshold C2, and any measurement value that is equal to or greater than the first threshold C1 may be determined to be a first measurement value as obtained while detecting the measurement chamber **103,** i.e., a photon count, and any measurement value that is equal to or less than the second threshold C2 may be determined to be a second measurement value, i.e., a dark count. Thereafter, the resultant first measurement value may be corrected with the second measurement value to obtain a measurement value C. In this case, due to noise and other influences, the dark count may in some cases be likely to exceed the second threshold, even though the shading portions **120a** are being detected. Therefore, if three or fewer consecutive measurement values have exceeded the second threshold, for example, they may be determined to be second measurement values.

Moreover, the signal representing the number of photons may be utilized in monitoring the operation of the sample analysis device. For example, in the sample analysis substrate **100,** in order to detect luminescence of a sample, the sample to undergo luminescence is accommodated in the measurement chamber **103.** However, due to inappropriate transfer of the sample, some composite **310** may be left in the reaction chamber **102,** or transferred to the recovery chamber **107** without being captured by the magnet **106.** In this case, since the amount of composite **310** accommodated in the measurement chamber **103** is reduced, proper measurement may not be possible.

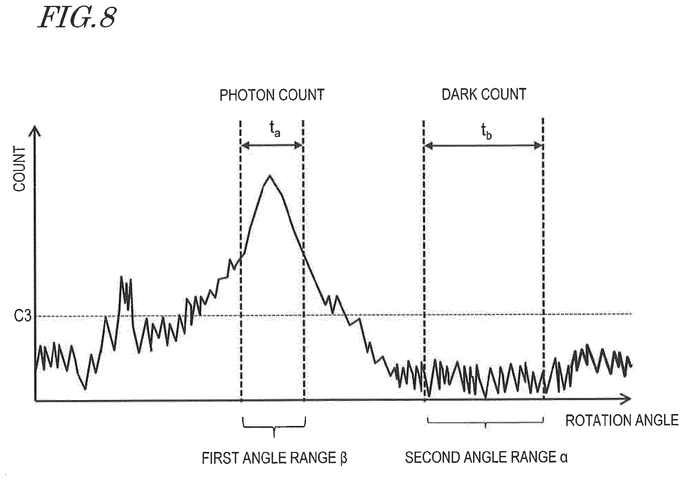

FIG. 8 shows, in a case where some of the composite **310** undergoing luminescence is left in the reaction chamber **102,** or has been transferred to the recovery chamber **107,** an exemplary distribution of numbers of photons to be counted while the sample analysis substrate **100** makes one complete turn. As shown in FIG. 8, even when the rotation angle is not in the first angle range, luminescence by the composite **310** located in the reaction chamber **102** and/or the recovery chamber **107** is being detected. Therefore, by detecting this luminescence, the control circuit **205** is able to detect abnormal transfers of the composite **310.** Specifically, the control circuit **205** may store a third threshold **C3** in memory. The control circuit **205** may compare the signal representing the number of photons against the third threshold C3, and if the signal representing the number of photons is equal to or greater than the third threshold at any rotation angle other than the first angle range, generate a signal indicating a measurement error. When a signal indicating a measurement error is generated, for example, the control circuit **205** may display text, figures, etc., that is indicative of abnormal measurement on the display device **210.**

This allows the operator of the sample analysis device **200** to recognize that proper measurement has not been made, and take an appropriate measure, e.g., exchanging the sample analysis substrate to again perform measurement.

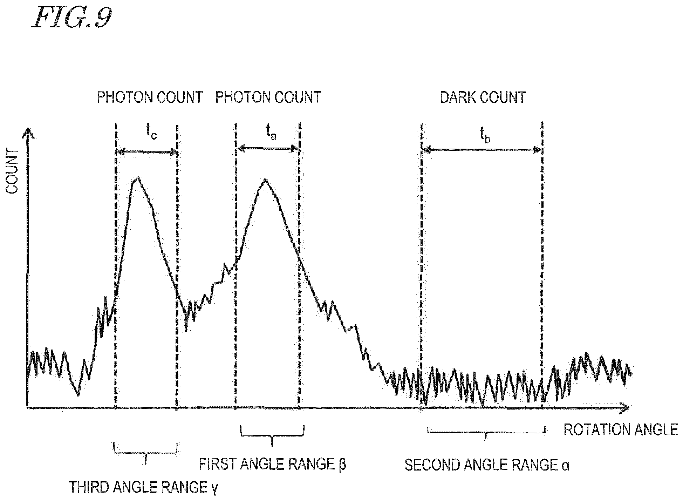

Moreover, the sample analysis substrate **100** may include two or more measurement chambers **103.** FIG. 9 shows, in a case where some of the composite **310** undergoing luminescence is left in the reaction chamber **102,** or has been transferred to the recovery chamber **107,** an exemplary distribution of numbers of photons to be counted while the sample analysis substrate **100** makes one complete turn.

From a third angle range $\gamma$ which is based on luminescence from the second measurement chamber **103,** the control circuit **205** determines a photon count, i.e., at least one third measurement value to be output by the photodetector **209,** and corrects the third measurement value with a dark count, i.e., a second measurement value. As a result, even in the case where the sample analysis substrate includes a plurality of measurement chambers, it is possible to measure luminescence of a sample, which is situated in two measurement chambers, through a single measurement.

Although the above embodiment illustrates that the sample analysis system employs a method of analysis utilizing magnetic particles, luminescence of the sample or a label substance that has bound to the sample may be detected without even using magnetic particles and without performing B/F separation. In this case, the sample analysis substrate **100** may not have a magnet.

(second embodiment)

In the first embodiment, the rotation speed is assumed to be essentially constant during one complete turn of the sample analysis substrate **100,** irrespective of the rotation angle; and a subtle amount of luminescence is measured by using a photon counter. However, when luminescence of a sample is measured by a photon counter while the sample analysis substrate is being rotated, due to the mechanical tolerance of the motor, eccentricity of the center of gravity due to the structure of the sample analysis substrate, etc., the angular velocity may vary from angle to angle while the sample analysis substrate makes one complete turn. If such changes in angular velocity occur during one complete turn, the time of measurement for counting photons, as based on angle, may vary. This may make it difficult to make accurate measurements of the number of photons. In the present embodiment, in order to enable accurate measurements of the number of photons even in such cases, the photon counter **208** makes corrections such that the counting time for the number of photons per unit rotation angle of the sample analysis substrate is equal.

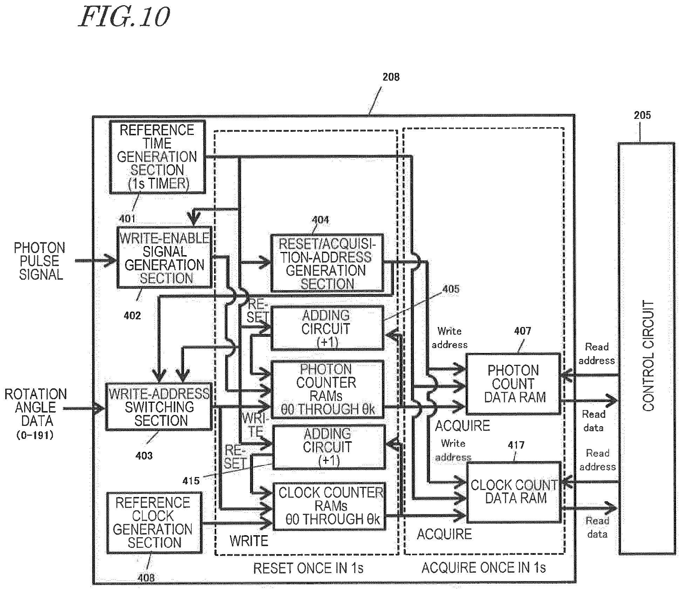

FIG. **10** is a diagram showing an exemplary construction of the photon counter **208** according to the present embodiment. The photon counter **208** measures the number of pulses in a pulse signal which is output from the photomultiplier element **207,** based on a predetermined unit of reference. For example, the photon counter **208** may count the number of photons based on the rotation angle of the sample analysis substrate **100** as a unit of reference. Moreover, the photon counter **208** counts the number of pulses of a reference clock signal based on the rotation angle of the sample analysis substrate **100** as a unit of reference. Specifically, based on a rotation angle signal which is output from the rotation angle detection circuit **204,** the photon counter **208** divides the angle of one complete turn, i.e., 360°, of the sample analysis substrate **100** into a plurality of phase ranges θ0 to θk, and measures the number of pulses in accordance with photons, by using counters for the respective phase ranges. Note that k may be 191, for example, and the photon counter **208** may count the number of photons with a resolving power of 1.875°. Moreover, based on a rotation angle signal which is output from the rotation angle detection circuit **204,** the angle of one complete turn, i.e., 360°, of the sample analysis substrate **100** is divided into a plurality of phase ranges 00 to θk, and the number of pulses in a reference clock signal is measured by using counters for the respective phase ranges.

To this end, the photon counter **208** includes a reference time generation section **401,** a write-enable signal generation section **402,** a write-address switching section **403,** a reset/acquisition-address generation section **404,** an adding circuit **405,** photon counter RAMs θ0 through θk, a photon count data RAM **407,** a reference clock generation section **408,** an adding circuit **415,** clock counter RAMs θ0 through θk, and a clock count data RAM **417.**

The reference time generation section **401** generates a reference time for resetting the counters. For example, the reference time may be 1 second. The write-enable signal generation section **402** generates a write-enable signal each time receiving a pulse signal based on a photon. Based on a rotation angle signal which is output from the rotation angle detection circuit **204,** the write-address switching section **403** switches between the photon counter RAMs θ0 through θk and clock counter RAMs θ0 through θk to which a write is made.

The reset/acquisition-address generation section **404** generates addresses at which the data of the photon counter RAMs θ0 through θk are to be written to the photon count data RAM **407,** and addresses at which the data of the clock counter RAMs θ0 through θk are to be written to the clock count data RAM **417.**

The adding circuit **405** and the photon counter RAMs θ0 through θk constitute (k+1) counters to count the numbers of photons for the phase ranges θ0 to θk.

The photon count data RAM **407,** which is a register, reads the count numbers as counted by the photon counter RAMs θ0 through θk, and temporarily stores the count numbers until the control circuit has read the count numbers.

The reference clock generation section **408** generates a reference clock signal for measuring a length of time for each of the phase ranges θ0 to θk. The reference clock signal includes pulses which are generated at predetermined time intervals. The frequency of the reference clock signal may be e.g. several dozen to several hundred kHz.

The adding circuit **415** and the clock counter RAMs θ0 through θk constitute (k+1) counters to count the number of pulses in the reference clock signal for the phase ranges 00 to θk.

The clock count data RAM **417,** which is a register, reads the count numbers as counted by the clock counter RAMs θ0 through θk, and temporarily stores the count numbers until the control circuit has read the count numbers.

While the photomultiplier element **207** outputs a pulse signal upon detection of photons in the luminescence occurring from the label substance **307,** the write-enable signal generation section **402** generates a write-enable signal each time receiving a pulse based on a photon. Since the write-address switching section **403** consecutively switches between the photon counter RAMs θ0 through θk to write to based on the rotation angle signal, the write-enable signal is input to one of the photon counter RAMs θ0 through θk that corresponds to the angle of the sample analysis substrate **100** at the time of a photon occurrence, and the adding circuit **405** causes the count number in that RAM to be incremented by one.

Based on address signals generated by the reset/acquisition-address generation section **404,** the photon count data RAM **407** reads the count numbers that are stored in the photon counter RAMs θ0 through θk.

At the same timing as the aforementioned photon measurements, the length of time of each of the phase ranges θ0 to θk is counted. Since the write-address switching section **403** consecutively switches between the clock counter RAMs θ**0** through θ**k** to write to based on the rotation angle signal, the reference clock signal which is output from the reference clock generation section is input to one of the clock counter RAMs θ**0** through θ**k** that corresponds to the angle of the sample analysis substrate **100** at the time of a photon occurrence, and the adding circuit **415** causes the count number in that RAM to be incremented by one.

Based on address signals generated by the reset/acquisition-address generation section **404,** the clock count data RAM **417** reads the count numbers that are stored in the clock counter RAMs θ**0** through θ**k.** The reference time generation section **401** resets these circuits at the lapse of every reference time.

The photomultiplier element **207** may be a traditional photomultiplier tube which is based on a vacuum tube having a plurality of electrodes thereon, or a semiconductor-based photomultiplier element, such as a silicon photomultiplier utilizing an avalanche photodiode in Geiger mode. The photon counter **208** is composed of an integrated circuit such as an FPGA, for example. Moreover, the photon counter **208** may be incorporated in the control circuit **205** as described below. Alternatively, the aforementioned signal processing by the photon counter **208** may be carried out by software that is executed by the control circuit **205.** The shutter **202** is provided between the light-receiving surface of the photomultiplier element **207** of the photodetector **209** and the sample analysis substrate **100,** and controls opening and closing of the light-receiving surface. While the shutter **202** is open, luminescence occurring from the composite **310** being retained in the measurement chamber **103** of the rotating sample analysis substrate **100** is incident on the photomultiplier element **207.** While the shutter **202** is closed, luminescence is blocked. The shutter **202** may have a mechanical structure, or be a liquid crystal shutter or the like.

The control circuit **205** controls the respective component elements such as the photodetector **209,** the drive circuit **206,** and the shutter **202.** Moreover, the control circuit **205** receives from the photodetector **209** measurement values of the number of photons for each of the phase ranges θ0 to θk as measured by the photodetector **209** while the motor **201** rotates the sample analysis substrate **100,** as well as measurement values of the number of pulses of the reference clock, and stores them to memory.

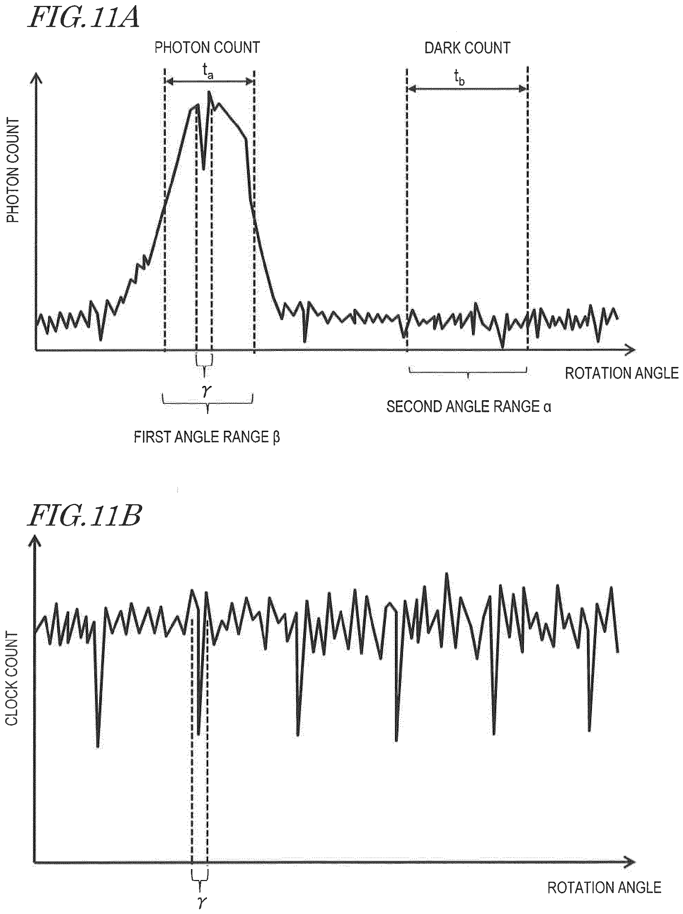

FIG. **11A** and FIG. **11B** show an exemplary photon count distribution and an exemplary clock count distribution in the phase ranges θ0 to θk. As shown in FIG. **11A,** in the first angle range β in which the measurement chamber **103** is close to the light-receiving surface of the photomultiplier element **207,** many photons are detected, whereas fewer photons are detected in the second angle range α in which the shading portions **120a** are close to the light-receiving surface of the photomultiplier element **207.** In the first angle range β, within an angle range γ, the number of photons is decreased. Hereinafter, the measurement of photons in the first angle range β may be referred to as a photon count, whereas the measurement of photons in the second angle range α may also be referred to as a dark count.

As shown in FIG. **11B,** while the sample analysis substrate **100** has a constant rotational angular velocity irrespective of the rotation angle, the clock counts are also constant. However, as shown in FIG. **11B,** during one complete turn of the sample analysis substrate **100,** the clock count decreases at every predetermined angle. For example, in the clock count distribution shown in FIG. **11B,** the counting time decreases for a total of six times. This means that, while the sample analysis substrate **100** makes one complete turn, the rotation becomes faster in six points to result in larger angular velocities.

From FIG. **11B,** it can be seen that the clock count decreases in the angle range γ**,** thus resulting in a shorter counting time for the number of photons. This indicates that, in the photon count distribution shown in FIG. **11A,** the decreased photon count in the angle range γ is not because of a lowered luminescence intensity, but because of a shorter time of measurement.

By correcting the photon count distribution across rotation angles by using the clock count distribution, the control circuit **205** calculates a corrected photon count distribution signal. Specifically, measurement values of photon counts and measurement values of clock counts for the phase ranges θ0 to θk as stored in the memory are read out, and subjected to computation. This computation may be performed after the luminescence measurements, or consecutively performed during the luminescence measurements, for example. Given a photon count distribution value Cr for the phase ranges 00 to θk ($0 \leqq r < k$), and a clock count distribution value $T_r$, as indicated by Expression (2) below, a corrected photon count value $CC_r$ is obtained by dividing $C_r$ with $T_r$. This computation is performed across the phase ranges 0 to k, whereby a correct photon count distribution signal is obtained. For example, if k is from 0 to 191, a photon count distribution signal which is corrected with a resolving power of 1.875° is obtained. From the corrected photon count distribution signal thus obtained, the control circuit **205** may extract e.g. measurement values of photons in the first angle range β, and determine a sum or an average of measurement values, thereby calculating a measurement value C' of luminescence occurring from the sample.

$$CC_r = \frac{C_r}{T_r}$$

$$(2)$$

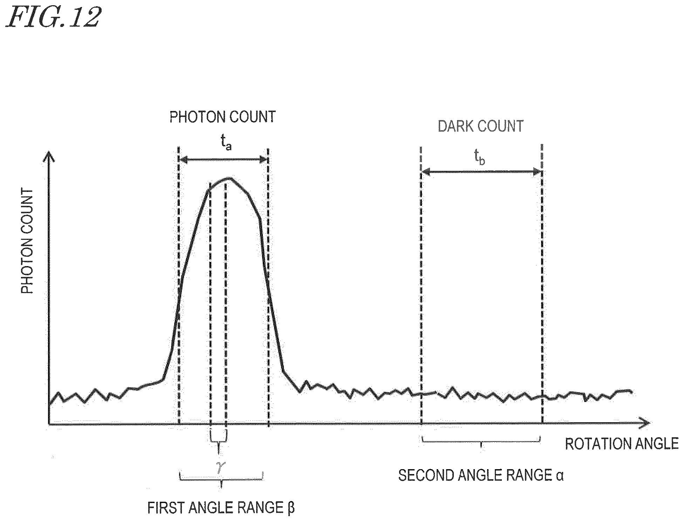

FIG. **12** shows a corrected photon count distribution across rotation angles in the phase ranges θ0 to θk (0° to 359°). As shown in FIG. **12,** the decrease in the number of photons in the angle range γ has been corrected for. Therefore, by performing such computations, it is possible to reduce measurement errors as to the number of photons due to fluctuations in the angular velocity depending on the rotation angle of the sample analysis substrate, thus enabling more accurate measurement of luminescence intensity of the sample.

The control circuit **205** may use the corrected photon count distribution signal which has thus been obtained to further remove influences of noises in the photomultiplier element **207**, in calculating a measurement value of the luminescence of the sample. As shown in FIG. **12,** in the corrected photon count distribution signal, ideally, no photons are to be detected in the second angle range α where the shading portions **120a** are close to the light-receiving surface of the photomultiplier element **207**. However, in actual measurements, counts that are ascribable to noises in the photomultiplier element **207** may be observed, and stray light resulting from the measurement room not being a perfect darkroom may be detected by the photomultiplier element **207**. The counts due to such noises may vary depending on the ambient temperature during the measurement. Therefore, as has been described in the first embodiment, in the corrected photon count distribution, the control circuit **205** may correct the number of photons as obtained while detecting the measurement chamber **103** by using the number of photons as obtained while detecting the shading portions **120a.** Specifically, from the first angle range β and the second angle range α**,** at least one first measurement value and at least one second measurement value may be respectively determined, and the at least one first measurement value may be corrected with the at least one second measurement value. The correct can be performed by using Expression (1), as has been described with respect to the first embodiment.

(operation of sample analysis system)

The sample analysis system **500** according to the present embodiment can also operate in similar manners to the first embodiment.

First, as shown in FIG. **6** and in a similar manner to the first embodiment, steps S1 and S2 are performed to introduce a sample onto the sample analysis substrate, and step S3 is performed to transfer the sample to the measurement chamber. Next, measurements of the number of photons associated with luminescence are taken.

[step S4]

The shutter **202** is opened, and the sample analysis substrate **100** is rotated. The shutter **202** may be opened only after the rotating sample analysis substrate **100** has attained constant rotation.

[step S5]

By using the photodetector **209**, luminescence occurring from the label substance **307** of the labeled antibody **308** bound to the composite **310**, being contained in magnetic particles **311**, is detected. Specifically, the photomultiplier element **207** of the photodetector **209** generates a pulse signal in accordance with photons from luminescence; and, by using a rotation angle signal which is output from the rotation angle detection circuit **204,** the photon counter **208** counts the number of photons and the number of pulses in the reference clock signal for each of phase ranges θ0 to θk. The control circuit **205** consecutively receives the respective numbers of photons for the phase ranges θ0 to θk and measurement values of the number of pulses in the reference clock signal, and stores them to memory.

[step S6]

After detecting luminescence for a certain period of time, the shutter **202** is closed, and detection is ended.

(4) a process of correcting measurement values

[step S7]

From the memory, the control circuit **205** reads out photon count distribution values and clock count distribution values for the phase ranges θ0 to θk, that is, across rotation angles, and as described above, a photon count distribution signal across rotation angles that has been corrected so that the counting time for the number of photons per unit rotation angle of the sample analysis substrate is equal.

Thereafter, measurement values of photons in the first angle range β are extracted, and a sum or an average of measurement values is determined, whereby a measurement value C' of luminescence occurring from the sample is calculated. Furthermore, a measurement value C may be determined in accordance with Expression (2).

(5) a process of displaying measurement value

[step S8]

On the display device **210,** the measurement value C' (C) and/or index values concerning the amount, concentration, etc., of antigen as determined by using the measurement value C' (C) is displayed.

(effects)

With the sample analysis device, sample analysis system, and method of measuring luminescence according to the present embodiment, a reference clock signal, a rotation angle signal, and a photon pulse signal are used to calculate a photon count distribution signal across rotation angles that has been corrected so that the counting time for the number of photons per unit rotation angle is equal. As a result, even when the rotational angular velocity of the sample analysis substrate changes during one complete turn, influences of the changing angular velocity can be suppressed so as to enable accurate measurement of subtle luminescence intensities of the sample. Moreover, by correcting a measurement value from luminescence of the sample with a shaded measurement value, it is possible to suppress influences of fluctuations in the measurement value due to temperature changes in the photomultiplier element and/or any stray light or the like which is not luminescence of the sample during measurement, thus enabling highly accurate measurement.

(variants)

In the above embodiment, the control circuits **205** counts the photon pulse signal and the reference clock signal on the basis of a rotation angle signal, and calculates a photon count distribution and a clock count distribution across rotation angles. Alternatively, the photon counter **208** may count the photon pulse signal and the rotation angle signal on the basis of a reference clock signal, and calculate a photon count distribution and a rotation angle distribution on the time axis. Also in this case, the control circuit **205** may correct the photon count distribution with the rotation angle distribution, and calculate a corrected photon count distribution signal.

Although the above embodiment illustrates that the sample analysis system employs a method of analysis utilizing magnetic particles, luminescence of the sample or a label substance that has bound to the sample may be detected without even using magnetic particles and without performing B/F separation. In this case, the sample analysis substrate 100 may not have a magnet.

A sample analysis device, a sample analysis system, and a method of measuring luminescence of a sample as disclosed in the present application are applicable to the analysis of a specific component in an analyte utilizing any of various reactions.

While the present subject matter has been described with respect to preferred embodiments thereof, it will be apparent to those skilled in the art that the disclosed subject matter may be modified in numerous ways and may assume many embodiments other than those specifically described above. Accordingly, it is intended by the appended claims to cover all modifications of the present subject matter that fall within the scope of the present claimed subject matter.

**Claims**

**1.** A sample analysis system comprising:

a sample analysis substrate (100) including a measurement chamber (103) having a window; a shading portion (120a), the shading portion (120a) being arranged to cover a portion of the sample analysis substrate (100) and being made of a material that does not transmit luminescence occurring from a sample; and
a sample analysis device (200) which, by rotating the sample analysis substrate (100) allows the sample that is introduced onto the sample analysis substrate (100) to be transferred to the measurement chamber, allows the sample to undergo luminescence in the measurement chamber, and measures the luminescence;
the sample analysis device comprising:

a motor (201) to rotate the sample analysis substrate (100) with the sample introduced thereon around a rotation axis (101) of the sample analysis substrate (100);
a drive circuit (206) to drive the motor (201);
a photodetector (209) to measure a number of photons associated with the luminescence from the sample being transmitted through the window of the measurement chamber (103), the photodetector (209) having a light-receiving surface; and
a control circuit (205) to calculate a measurement value of the luminescence of the sample by using a number of photons measured, by the photodetector (209), while the motor (201) rotates the sample analysis substrate (100),
wherein
the photodetector (209) outputs at least one first measurement value and at least one second measurement value while the sample analysis substrate rotates, the at least one first measurement value being based on the number of photons obtained when the measurement chamber (103) passes over the light-receiving surface of the photodetector (209), the at least one second measurement value being based on the number of photons obtained when the shading portion (120a) passes over the light-receiving surface of the photodetector (209), and
the control circuit (205) calculates a measurement value of the luminescence of the sample by correcting the at least one first measurement value with the at least one second measurement value.

2. The sample analysis system of claim 1, wherein,

the photodetector (209) is configured to output a plurality of measurement values obtained through one complete turn of the sample analysis substrate (100); and
the control circuit (205) is configured to compare each of the plurality of measurement values against a first threshold and against a second threshold, and determine any one of the plurality of measurement values that is equal to or greater than the first threshold to be the at least one first measurement value and any one of the plurality of measurement values that is equal to or less than the second threshold to be the at least one second measurement value.

3. The sample analysis system of claim 1, further comprising a rotation angle detection circuit (204) to detect a rotation angle of the sample analysis substrate (100) and generate a rotation angle signal, wherein,

the photodetector (209) is configured to output a plurality of measurement values obtained while the sample analysis substrate (100) makes one complete turn; and
the control circuit (205) is configured to perform the above calculation by using a measurement value which is measured by the photodetector (209) when the rotation angle is in a first angle range and a measurement value which is measured by the photodetector (209) when the rotation angle is in a second angle range, respectively as the at least one first measurement value and as the at least one second measurement value.

4. The sample analysis system of claim 3, wherein the second angle range is greater than the first angle range.

5. The sample analysis system of claim 3, wherein the control circuit (205) is configured to compare against a third threshold a measurement value which is measured by the photodetector (209) when the rotation angle is not in the first angle range, and generate a signal indicating a measurement error when the measurement value is equal to or greater than the third threshold.

6. The sample analysis system of claim 1, wherein,

the sample analysis substrate (100) includes another measurement chamber in which another sample to undergo luminescence is retained;
the photodetector (209) further is configured to output at least one third measurement value while the sample analysis substrate (100) makes one complete turn, the at least one third measurement value being based on the number of photons obtained when the other measurement chamber passes over the light-receiving surface of the photodetector (209); and

the control circuit (205) is configured to calculate a measurement value of the luminescence of the other sample by correcting the at least one third measurement value with the at least one second measurement value.

7. The sample analysis system of claim 1, wherein the photodetector (209) includes: a photomultiplier element (207) to receive a photon or photons and generate a pulse signal or pulse signals in accordance with the number of photons; and a photon counter (208) to count the pulse signal.

8. The sample analysis system of claim 1, comprising a light-shield cap (120a) that includes a pair of shading portions (120a) and a connecting portion (120c) and is attached to the substrate (110) so that the shading portions (120a) partially cover the principal faces (110c) and (110d) of the substrate (110).

9. The sample analysis system of claim 1, wherein the shading portion (120a) has a substantial sector shape.

10. A method of measuring luminescence of a sample, the method comprising the steps of:

introducing a sample into a measurement chamber (103) provided onto a sample analysis substrate (100), the substrate (100) being arranged with a shading portion (120a) covering a portion of the substrate (100), the shading portion (120a) being made of a material that does not transmit luminescence occurring from the sample and the measurement chamber (103) having a window; and

measuring a number of photons associated with luminescence from the sample with a photodetector (209) which measures a number of photons, while rotating the sample analysis substrate (100) with the sample introduced thereon to output at least one first measurement value and at least one second measurement value, the at least one first measurement value being based on the number of photons obtained when the measurement chamber (103) passes over a light-receiving surface of the photodetector (209), the at least one second measurement value being based on the number of photons obtained when the shading portion (120a) passes over the light-receiving surface of the photodetector (209); and

correcting the at least one first measurement value with the at least one second measurement value.

11. The measurement method for measuring luminescence of a sample of claim 10, wherein,

in the measuring step, the photodetector (209) outputs a plurality of measurement values obtained through one complete turn of the sample analysis substrate (100); and

the correcting step compares each of the plurality of measurement values against a first threshold and against a second threshold, and determines any one of the plurality of measurement values that is equal to or greater than the first threshold to be the at least one first measurement value and any one of the plurality of measurement values that is equal to or less than the second threshold to be the at least one second measurement value.

12. The measurement method for measuring luminescence of a sample of claim 10, wherein,
in the measuring step:

a rotation angle of the sample analysis substrate (100) is detected, and a rotation angle signal is generated;
the photodetector (209) outputs a plurality of measurement values obtained through one complete turn of the sample analysis substrate (100); and

the correcting step performs the above calculation by using a measurement value which is measured by the photodetector (209) when the rotation angle is in a first angle range and a measurement value which is measured by the photodetector (209) when the rotation angle is in a second angle range, respectively as the at least one first measurement value and as the at least one second measurement value.

13. The measurement method for measuring luminescence of a sample of claim 12, wherein the second angle range is greater than the first angle range.

14. The measurement method for measuring luminescence of a sample of claim 12, wherein the measurement step compares against a third threshold a measurement value which is measured by the photodetector (209) when the rotation angle is not in the first angle range, and generates a signal indicating a measurement error when the measurement value is equal to or greater than the third threshold.

**15.** The measurement method for measuring luminescence of a sample of claim 10, wherein,

the sample analysis substrate (100) includes another measurement chamber in which another sample to undergo luminescence is retained;
the measurement step further outputs at least one third measurement value while the sample analysis substrate makes one complete turn, the at least one third measurement value being based on the number of photons obtained when the other measurement chamber passes over the light-receiving surface of the photodetector; and
the correcting step calculates a measurement value of the luminescence of the other sample by correcting the at least one third measurement value with the at least one second measurement value.

**Patentansprüche**

**1.** Probenanalysesystem, umfassend:

ein Probenanalysesubstrat (100), das eine Messkammer (103) umfasst, die ein Fenster aufweist;
einen Abschattungsabschnitt (120a), wobei der Abschattungsabschnitt (120a) angeordnet ist, um einen Abschnitt des Probenanalysesubsubstrats (100) zu bedecken, und aus einem Material besteht, das Lumineszenz, die von einer Probe auftritt, nicht durchlässt, und
eine Probenanalysevorrichtung (200), die durch Drehen des Probenanalysesubstrats (100) das Überführen der Probe, die auf das Probenanalysesubstrat (100) eingeführt wird, zur Messkammer erlaubt, es der Probe erlaubt, Lumineszenz in der Messkammer ausgesetzt zu werden, und die Lumineszenz misst;
wobei die Probenanalysevorrichtung umfasst:

einen Motor (201) zum Drehen des Probenanalysesubstrats (100) mit der darauf eingeführten Probe um eine Drehachse (101) des Probenanalysesubstrats (100);
eine Antriebsschaltung (206) zum Antreiben des Motors (201) ;
einen Photodetektor (209) zum Messen einer Anzahl von Photonen, die mit der Lumineszenz von der Probe verbunden ist, die durch das Fenster der Messkammer (103) durchgelassen wird, wobei der Photodetektor (209) eine Lichtempfangsoberfläche aufweist; und
eine Steuerschaltung (205) zum Berechnen eines Messwerts der Lumineszenz der Probe unter Verwendung einer Anzahl von Photonen, die durch den Photodetektor (209) gemessen wird, während der Motor (201) das Probenanalysesubstrat (100) dreht,
wobei
der Photodetektor (209) mindestens einen ersten Messwert und mindestens einen zweiten Messwert ausgibt, während das Probenanalysesubstrat sich dreht, wobei der mindestens eine erste Messwert auf der Anzahl von Photonen basiert, die erhalten wird, wenn die Messkammer (103) die Lichtempfangsoberfläche des Photodetektors (209) überquert, wobei der mindestens eine zweite Messwert auf der Anzahl von Photonen basiert, die erhalten wird, wenn der Abschattungsabschnitt (120a) die Lichtempfangsoberfläche des Photodetektors (209) überquert, und
die Steuerschaltung (205) einen Messwert der Lumineszenz der Probe durch Korrigieren des mindestens einen ersten Messwerts mit dem mindestens einen zweiten Messwert berechnet.

**2.** Probenanalysesystem nach Anspruch 1, wobei

der Photodetektor (209) dazu ausgestaltet ist, eine Vielzahl von Messwerten auszugeben, die durch eine vollständige Drehung des Probenanalysesubstrats (100) erhalten werden; und
die Steuerschaltung (205) dazu ausgestaltet ist, jeden von der Vielzahl von Messwerten mit einem ersten Schwellenwert und mit einem zweiten Schwellenwert zu vergleichen und einen beliebigen von der Vielzahl von Messwerten, der gleich oder größer als der erste Schwellenwert ist, als den mindestens einen ersten Messwert und einen beliebigen von der Vielzahl von Messwerten, der gleich oder kleiner als der zweite Schwellenwert ist, als den mindestens einen zweiten Messwert zu bestimmen.

**3.** Probenanalysesystem nach Anspruch 1, das ferner eine Drehwinkel-Feststellungsschaltung (204) zum Feststellen eines Drehwinkels des Probenanalysesubstrats (100) und Erzeugen eines Drehwinkelsignals umfasst, wobei

der Photodetektor (209) dazu ausgestaltet ist, eine Vielzahl von Messwerten auszugeben, die erhalten werden, während das Probenanalysesubstrat (100) eine vollständige Drehung vollzieht; und

die Steuerschaltung (205) dazu ausgestaltet ist, die vorhergehende Berechnung unter Verwendung eines Messwerts, der durch den Photodetektor (209) gemessen wird, wenn der Drehwinkel in einem ersten Winkelbereich liegt, und eines Messwerts, der durch den Photodetektor (209) gemessen wird, wenn der Drehwinkel in einem zweiten Winkelbereich liegt, als den mindestens einen ersten Messwert beziehungsweise als den mindestens einen zweiten Messwert durchzuführen.

4. Probenanalysesystem nach Anspruch 3, wobei der zweite Winkelbereich größer als der erste Winkelbereich ist.

5. Probenanalysesystem nach Anspruch 3, wobei die Steuerschaltung (205) dazu ausgestaltet ist, einen Messwert, der durch den Photodetektor (209) gemessen wird, wenn der Drehwinkel nicht im ersten Winkelbereich liegt, mit einem dritten Schwellenwert zu vergleichen und ein Signal zu erzeugen, das einen Messfehler angibt, wenn der Messwert gleich oder größer als der dritte Schwellenwert ist.

6. Probenanalysesystem nach Anspruch 1, wobei

das Probenanalysesubstrat (100) eine weitere Messkammer umfasst, in der eine weitere Probe, die Lumineszenz auszusetzen ist, aufbewahrt wird;
der Photodetektor (209) ferner dazu ausgestaltet ist, mindestens einen dritten Messwert auszugeben, während das Probenanalysesubstrat (100) eine vollständige Drehung vollzieht, wobei der mindestens eine dritte Messwert auf der Anzahl von Photonen basiert, die erhalten wird, wenn die weitere Messkammer die Lichtempfangsoberfläche des Photodetektors (209) überquert; und
die Steuerschaltung (205) dazu ausgestaltet ist, einen Messwert der Lumineszenz der weiteren Probe durch Korrigieren des mindestens einen dritten Messwerts mit dem mindestens einen zweiten Messwert zu berechnen.

7. Probenanalysesystem nach Anspruch 1, wobei der Photodetektor (209) umfasst: ein Photomultiplier-Element (207) zum Empfangen eines Photons oder mehrerer Photonen und Erzeugen eines Impulssignals oder mehrerer Impulssignale in Übereinstimmung mit der Anzahl von Photonen; und einen Photonenzähler (208) zum Zählen des Impulssignals.

8. Probenanalysesystem nach Anspruch 1, das eine Lichtschutzkappe (120a) umfasst, die ein Paar Abschattungsabschnitte (120a) und einen Verbindungsabschnitt (120c) umfasst und derart an dem Substrat (110) angebracht ist, dass die Abschattungsabschnitte (120a) die Hauptseiten (110c) und (110d) des Substrats (110) teilweise bedecken.

9. Probenanalysesystem nach Anspruch 1, wobei der Abschattungsabschnitt (120a) im Wesentlichen eine Ausschnittform aufweist.

10. Verfahren zum Messen von Lumineszenz einer Probe, wobei das Verfahren die folgenden Schritte umfasst:

Einführen einer Probe in eine Messkammer (103), die auf einem Probenanalysesubstrat (100) bereitgestellt wird, wobei das Substrat (100) mit einem Abschattungsabschnitt (120a) angeordnet ist, der einen Abschnitt des Substrats (100) bedeckt, wobei der Abschattungsabschnitt (120a) aus einem Material besteht, das Lumineszenz, die von der Probe und der Messkammer (103), die ein Fenster aufweist, auftritt, nicht durchlässt; und
Messen einer Anzahl von Photonen, die mit Lumineszenz von der Probe verbunden ist, mit einem Photodetektor (209), der eine Anzahl von Photonen misst, bei gleichzeitigem Drehen des Probenanalysesubstrats (100) mit der darauf eingeführten Probe, um mindestens einen ersten Messwert und mindestens einen zweiten Messwert auszugeben, wobei der mindestens eine erste Messwert auf der Anzahl von Photonen basiert, die erhalten wird, wenn die Messkammer (103) eine Lichtempfangsoberfläche des Photodetektors (209) überquert, wobei der mindestens eine zweite Messwert auf der Anzahl von Photonen basiert, die erhalten wird, wenn der Abschattungsabschnitt (120a) die Lichtempfangsoberfläche des Photodetektors (209) überquert; und
Korrigieren des mindestens einen ersten Messwerts mit dem mindestens einen zweiten Messwert.

11. Messverfahren zum Messen von Lumineszenz einer Probe nach Anspruch 10, wobei

im Messschritt der Photodetektor (209) eine Vielzahl von Messwerten ausgibt, die durch eine vollständige Drehung des Probenanalysesubstrats (100) erhalten werden; und
der Korrekturschritt jeden von der Vielzahl von Messwerten mit einem ersten Schwellenwert und mit einem zweiten Schwellenwert vergleicht und einen beliebigen von der Vielzahl von Messwerten, der gleich oder größer als der erste Schwellenwert ist, als den mindestens einen ersten Messwert und einen beliebigen von der Vielzahl von Messwerten, der gleich oder kleiner als der zweite Schwellenwert ist, als den mindestens einen zweiten Messwert bestimmt.

**12.** Messverfahren zum Messen von Lumineszenz einer Probe nach Anspruch 10, wobei im Messschritt:

ein Drehwinkel des Probenanalysesubstrats (100) festgestellt wird und ein Drehwinkelsignal erzeugt wird;
der Photodetektor (209) eine Vielzahl von Messwerten ausgibt, die durch eine vollständige Drehung des Probenanalysesubstrats (100) erhalten werden; und
der Korrekturschritt die vorhergehende Berechnung unter Verwendung eines Messwerts, der durch den Photodetektor (209) gemessen wird, wenn der Drehwinkel in einem ersten Winkelbereich liegt, und eines Messwerts, der durch den Photodetektor (209) gemessen wird, wenn der Drehwinkel in einem zweiten Winkelbereich liegt, als den mindestens einen ersten Messwert beziehungsweise als den mindestens einen zweiten Messwert durchführt.

**13.** Messverfahren zum Messen von Lumineszenz einer Probe nach Anspruch 12, wobei der zweite Winkelbereich größer als der erste Winkelbereich ist.

**14.** Messverfahren zum Messen von Lumineszenz einer Probe nach Anspruch 12, wobei der Messschritt einen Messwert, der durch den Photodetektor (209) gemessen wird, wenn der Drehwinkel nicht im ersten Winkelbereich liegt, mit einem dritten Schwellenwert vergleicht und ein Signal erzeugt, das einen Messfehler angibt, wenn der Messwert gleich oder größer als der dritte Schwellenwert ist.

**15.** Messverfahren zum Messen von Lumineszenz einer Probe nach Anspruch 10, wobei

das Probenanalysesubstrat (100) eine weitere Messkammer umfasst, in der eine weitere Probe, die Lumineszenz auszusetzen ist, aufbewahrt wird;
der Messschritt ferner mindestens einen dritten Messwert ausgibt, während das Probenanalysesubstrat eine vollständige Drehung vollzieht, wobei der mindestens eine dritte Messwert auf der Anzahl von Photonen basiert, die erhalten wird, wenn die weitere Messkammer die Lichtempfangsoberfläche des Photodetektors überquert; und
der Korrekturschritt einen Messwert der Lumineszenz der weiteren Probe durch Korrigieren des mindestens einen dritten Messwerts mit dem mindestens einen zweiten Messwert berechnet.

**Revendications**

**1.** Système d'analyse d'échantillon comprenant :

un substrat d'analyse d'échantillon (100) comprenant une chambre de mesure (103) ayant une fenêtre ;
une portion d'obscurcissement (120a), la portion d'obscurcissement (120a) étant disposée de manière à couvrir une portion du substrat d'analyse d'échantillon (100) et étant faite d'un matériau qui ne transmet pas la luminescence provenant d'un échantillon ; et
un dispositif d'analyse d'échantillon (200) qui, en faisant tourner le substrat d'analyse d'échantillon (100), permet à l'échantillon qui est introduit sur le substrat d'analyse d'échantillon (100) d'être transféré à la chambre de mesure, permet à l'échantillon de subir une luminescence dans la chambre de mesure, et mesure la luminescence ;
le dispositif d'analyse d'échantillon comprenant :

un moteur (201) pour faire tourner le substrat d'analyse d'échantillon (100) avec l'échantillon introduit sur celui-ci autour d'un axe de rotation (101) du substrat d'analyse d'échantillon (100) ;
un circuit d'entraînement (206) pour entraîner le moteur (201) ;
un photodétecteur (209) pour mesurer le nombre de photons associés à la luminescence provenant de l'échantillon qui est transmise à travers la fenêtre de la chambre de mesure (103), le photodétecteur (209) ayant une surface recevant la lumière ; et
un circuit de commande (205) pour calculer la valeur de mesure de la luminescence de l'échantillon en utilisant le nombre de photons mesuré par le photodétecteur (209), tandis que le moteur (201) fait tourner le substrat d'analyse d'échantillon (100),

dans lequel

le photodétecteur (209) délivre en sortie au moins une première valeur de mesure et au moins une deuxième valeur de mesure tandis que le substrat d'analyse d'échantillon tourne, l'au moins une première valeur de mesure étant basée sur le nombre de photons obtenu quand la chambre de mesure (103) passe au-dessus de la surface recevant la lumière du photodétecteur (209), l'au moins une deuxième valeur de mesure étant basée sur le nombre de photons obtenu quand la portion d'obscurcissement (120a) passe au-dessus de la surface recevant la lumière du photodétecteur (209), et

le circuit de commande (205) calcule la valeur de mesure de la luminescence de l'échantillon en corrigeant l'au moins une première valeur de mesure avec l'au moins une deuxième valeur de mesure.

2. Système d'analyse d'échantillon selon la revendication 1, dans lequel le photodétecteur (209) est configuré pour délivrer en sortie une pluralité de valeurs de mesures obtenues durant un tour complet du substrat d'analyse d'échantillon (100) ; et

le circuit de commande (205) est configuré pour comparer chacune parmi la pluralité de valeurs de mesure avec un premier seuil et avec un deuxième seuil, et pour déterminer que l'une quelconque parmi la pluralité de valeurs de mesure qui est égale ou supérieure au premier seuil est l'au moins une première valeur de mesure et que l'une quelconque parmi la pluralité de valeurs de mesure qui est égale ou inférieure au deuxième seuil est l'au moins une deuxième valeur de mesure.

3. Système d'analyse d'échantillon selon la revendication 1, comprenant en outre un circuit de détection d'angle de rotation (204) pour détecter l'angle de rotation du substrat d'analyse d'échantillon (100) et générer un signal d'angle de rotation, dans lequel

le photodétecteur (209) est configuré pour délivrer en sortie une pluralité de valeurs de mesure obtenues tandis que le substrat d'analyse d'échantillon (100) fait un tour complet ; et

le circuit de commande (205) est configuré pour effectuer le calcul ci-dessus en utilisant une valeur de mesure qui est mesurée par le photodétecteur (209) quand l'angle de rotation est dans une première plage d'angle et une valeur de mesure qui est mesurée par le photodétecteur (209) quand l'angle de rotation est dans une deuxième plage d'angle, respectivement en tant que l'au moins une première valeur de mesure et l'au moins une deuxième valeur de mesure.

4. Système d'analyse d'échantillon selon la revendication 3, dans lequel la deuxième plage d'angle est supérieure à la première plage d'angle.

5. Système d'analyse d'échantillon selon la revendication 3, dans lequel le circuit de commande (205) est configuré pour comparer à un troisième seuil une valeur de mesure qui est mesurée par le photodétecteur (209) quand l'angle de rotation n'est pas dans la première plage d'angle, et pour générer un signal indiquant une erreur de mesure quand la valeur de mesure est égale ou supérieure au troisième seuil.

6. Système d'analyse selon la revendication 1, dans lequel

le substrat d'analyse d'échantillon (100) comprend une autre chambre de mesure dans laquelle un autre échantillon devant subir une luminescence est conservé ;

le photodétecteur (209) est en outre configuré pour délivrer en sortie au moins une troisième valeur de mesure tandis que le substrat d'analyse d'échantillon (100) fait un tour complet, l'au moins une troisième valeur de mesure étant basée sur le nombre de photons obtenu quand l'autre chambre de mesure passe au-dessus de la surface recevant la lumière du photodétecteur (209) ; et

le circuit de commande (205) est configuré pour calculer la valeur de mesure de la luminescence de l'autre échantillon en corrigeant l'au moins une troisième valeur de mesure avec l'au moins une deuxième valeur de mesure.

7. Système d'analyse d'échantillon selon la revendication 1, dans lequel le photodétecteur (209) comprend : un élément photomultiplicateur (207) pour recevoir un ou plusieurs photons et générer un ou plusieurs signaux d'impulsion en fonction du nombre de photons ; et un compteur de photons (208) pour compter le signal d'impulsion.

8. Système d'analyse d'échantillon selon la revendication 1, comprenant un couvercle pare-lumière (120a) qui comprend une paire de portions d'obscurcissement (120a) et une portion de connexion (120c) et qui est attaché au substrat (110) de façon que les portions d'obscurcissement (120a) couvrent partiellement les faces principales (110c) et (110d) du substrat (110).

9. Système d'analyse d'échantillon selon la revendication 1 dans lequel la portion d'obscurcissement (120a) a une forme pratiquement sectorielle.

10. Procédé de mesure de luminescence d'un échantillon, le procédé comprenant les étapes suivantes :

introduction d'un échantillon dans une chambre de mesure (103) disposée sur un substrat d'analyse d'échantillon (100), le substrat (100) étant doté d'une portion d'obscurcissement (120a) couvrant une portion du substrat (100), la portion d'obscurcissement (120a) étant faite d'un matériau qui ne transmet pas la luminescence provenant de l'échantillon et la chambre de mesure (103) ayant une fenêtre ; et

la mesure du nombre de photons associés à la luminescence provenant de l'échantillon avec un photodétecteur (209) qui mesure le nombre de photons, pendant que le substrat d'analyse d'échantillon (100) tourne avec l'échantillon introduit sur celui-ci, pour la délivrance en sortie d'au moins une première valeur de mesure et d'au moins une deuxième valeur de mesure, l'au moins une première valeur de mesure étant basée sur le nombre de photons obtenu quand la chambre de mesure (103) passe au-dessus de la surface recevant la lumière du photodétecteur (209), l'au moins une deuxième valeur de mesure étant basée sur le nombre de photons obtenu quand la portion d'obscurcissement (120a) passe au-dessus de la surface recevant la lumière du photodétecteur (209) ; et

la correction de l'au moins une première valeur de mesure avec l'au moins une deuxième valeur de mesure.

11. Procédé de mesure pour mesurer la luminescence d'un échantillon selon la revendication 10, dans lequel

dans l'étape de mesure, le photodétecteur (209) délivre en sortie une pluralité de valeurs de mesure obtenues durant un tour complet du substrat d'analyse d'échantillon (100) ; et

l'étape de correction compare chacune parmi la pluralité de valeurs de mesure avec un premier seuil et avec un deuxième seuil, et détermine que l'une quelconque parmi la pluralité de valeurs de mesure qui est égale ou supérieure au premier seuil est l'au moins une première valeur de mesure et que l'une quelconque parmi la pluralité de valeurs de mesure qui est égale ou inférieure au deuxième seuil est l'au moins une deuxième valeur de mesure.

12. Procédé de mesure pour mesurer la luminescence d'un échantillon selon la revendication 10, dans lequel dans l'étape de mesure :

l'angle de rotation du substrat d'analyse d'échantillon (100) est détecté, et un signal d'angle de rotation est généré ;

le photodétecteur (209) délivre en sortie une pluralité de valeurs de mesure obtenues durant un tour complet du substrat d'analyse d'échantillon (100) ; et

l'étape de correction effectue le calcul ci-dessus en utilisant une valeur de mesure qui est mesurée par le photodétecteur (209) quand l'angle de rotation est dans une première plage d'angle et une valeur de mesure qui est mesurée par le photodétecteur (209) quand l'angle de rotation est dans une deuxième plage d'angle, respectivement en tant que l'au moins une première valeur de mesure et l'au moins une deuxième valeur de mesure.

13. Procédé de mesure pour mesurer la luminescence d'un échantillon selon la revendication 12, dans lequel la deuxième plage d'angle est supérieure à la première plage d'angle.

14. Procédé de mesure pour mesurer la luminescence d'un échantillon selon la revendication 12, dans lequel l'étape de mesure compare à un troisième seuil une valeur de mesure qui est mesurée par le photodétecteur (209) quand l'angle de rotation n'est pas dans la première plage d'angle, et génère un signal indiquant une erreur de mesure quand la valeur de mesure est égale ou supérieure au troisième seuil.

15. Procédé de mesure pour mesurer la luminescence d'un échantillon selon la revendication 10, dans lequel

le substrat d'analyse d'échantillon (100) comprend une autre chambre de mesure dans laquelle un autre échantillon devant subir une luminescence est conservé ;

l'étape de mesure comprend en outre la délivrance en sortie d'au moins une troisième valeur de mesure tandis que le substrat d'analyse d'échantillon fait un tour complet, l'au moins une troisième valeur de mesure étant basée sur le nombre de photons obtenu quand l'autre chambre de mesure passe au-dessus de la surface recevant la lumière du photodétecteur ; et

l'étape de correction calcule une valeur de mesure de la luminescence de l'autre échantillon en corrigeant l'au moins une troisième valeur de mesure avec l'au moins une deuxième valeur de mesure.

FIG.1

*FIG.2A*

*FIG.2B*

FIG.3A

FIG.3B

*FIG.4A*

*FIG.4B*

208

205

REFERENCE TIME GENERATION SECTION (1s TIMER)

401

WRITE-ENABLE SIGNAL GENERATION SECTION

402

403

PHOTON PULSE SIGNAL

ROTATION ANGLE DATA (0-191)

WRITE-ADDRESS SWITCHING SECTION

404

RESET/ACQUISI-TION-ADDRESS GENERATION SECTION

RE-SET

405

ADDING CIRCUIT (+1)

PHOTON COUNTER RAMs θ0 THROUGH θk

WRITE

Write address

407

PHOTON COUNT DATA RAM

ACQUIRE ※ DUAL PORT RAM

RESET ONCE IN 1s

ACQUIRE ONCE IN 1s

CONTROL CIRCUIT

Read address

Read data

28

FIG.5

## FIG.6

```
                    ┌─────────────┐
                    │    START    │
                    └─────────────┘
                           │
                           ▼
        ┌──────────────────────────────────────┐
        │  INTRODUCE ANALYTE ONTO SAMPLE        │  ╱ S1
        │        ANALYSIS SUBSTRATE             │
        └──────────────────────────────────────┘
                           │
                           ▼
        ┌──────────────────────────────────────┐
        │  SET SAMPLE ANALYSIS SUBSTRATE ON     │  ╱ S2
        │        SAMPLE ANALYSIS DEVICE         │
        └──────────────────────────────────────┘
                           │
                           ▼
        ┌──────────────────────────────────────┐
        │  ROTATE AND SWING SAMPLE ANALYSIS SUBSTRATE │  ╱ S3
        └──────────────────────────────────────┘
                           │
                           ▼
        ┌──────────────────────────────────────┐
        │             OPEN SHUTTER              │  ╱ S4
        └──────────────────────────────────────┘
                           │
                           ▼
        ┌──────────────────────────────────────┐
        │            MEASUREMENT                │  ╱ S5
        └──────────────────────────────────────┘
                           │
                           ▼
        ┌──────────────────────────────────────┐
        │            CLOSE SHUTTER              │  ╱ S6
        └──────────────────────────────────────┘
                           │
                           ▼
        ┌──────────────────────────────────────┐
        │      CALCULATE MEASUREMENT VALUE      │  ╱ S7
        └──────────────────────────────────────┘
                           │
                           ▼
        ┌──────────────────────────────────────┐
        │           DISPLAY RESULTS            │  ╱ S8
        └──────────────────────────────────────┘
                           │
                           ▼
                    ┌─────────────┐
                    │     END     │
                    └─────────────┘
```

30

FIG.7

FIG.8

*FIG.9*

## FIG.10

## FIG.11A

PHOTON COUNT

DARK COUNT

PHOTON COUNT

$t_a$

$t_b$

ROTATION ANGLE

$\gamma$

FIRST ANGLE RANGE β

SECOND ANGLE RANGE α

## FIG.11B

CLOCK COUNT

ROTATION ANGLE

$\gamma$

*FIG.12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7500910 A
- US 2009189089 A1
- US 2011104009 A1
- JP 2015081884 A
- US 20180003642 A2